# EUROPEAN PATENT SPECIFICATION

(11) **EP 4 287 450 B1**
(45) Date of publication and mention of the grant of the patent: **15.04.2026**
(21) Application number: 22888636.2
(22) Date of filing: 08.12.2022
(51) Int. Cl.: H02J 7/00

(54) **BATTERY CONTROL CIRCUIT, ELECTRONIC DEVICE, AND CHARGING CONTROL METHOD**
BATTERIESTEUERUNGSSCHALTUNG, ELEKTRONISCHE VORRICHTUNG UND LADESTEUERUNGSVERFAHREN
CIRCUIT DE COMMANDE DE BATTERIE, DISPOSITIF ÉLECTRONIQUE ET PROCÉDÉ DE COMMANDE DE CHARGE

(30) Priority: 08.04.2022 CN 202210369450
(43) Date of publication of application: 06.12.2023
(73) Proprietor: Honor Device Co., Ltd., Shenzhen, Guangdong 518040 (CN)
(72) Inventor: LU, Lun, Shenzhen, Guangdong 518040 (CN); ZHU, Hua, Shenzhen, Guangdong 518040 (CN); ZHOU, Haibin, Shenzhen, Guangdong 518040 (CN); WANG, Xiaoyang, Shenzhen, Guangdong 518040 (CN); DENG, Bin, Shenzhen, Guangdong 518040 (CN)
(74) Representative: Isarpatent
(86) International application number: PCT/CN2022/137646
(87) International publication number: WO 2023/193460

(56) References cited:
- CN-A- 110 244 229
- CN-A- 111 293 754
- CN-A- 112 542 863
- CN-A- 113 364 089
- DE-A1- 102008 060 936
- US-A1- 2009 123 829
- US-A1- 2017 062 880
- US-A1- 2022 057 350

## Description

### TECHNICAL FIELD

This application relates to the field of battery technologies, and in particular, to a battery control circuit, an electronic device, and a charging control method.

### BACKGROUND

In a conventional mobile terminal, even if a plurality of batteries (for example, a plurality of batteries connected in series, or a plurality of batteries connected in parallel) are used for charging and discharging, the plurality of batteries usually can be charged only in a same charging mode, and serious bias current and bias voltage problems may occur.

In addition, to ensure safety of batteries, a quite high requirement is imposed on uniformity of the batteries, and the batteries usually need to be strictly selected. In addition, specific margin needs to be reserved during charging of the batteries. As a result, battery performance cannot be fully utilized.

CN 111 293 754 A discloses a charging system, a method, an electronic device and a computer-readable storage medium.

US 2009/123829 A1 discloses a high-capacity battery pack attachable to a small-sized electronic device in which a lithium-polymer cell and a lithium-ion cell are physically coupled and to be electrically connected in parallel, and an electronic device using the battery pack maximize a battery mounting space while providing a high-capacity battery pack useful for the small-sized electronic device.

### SUMMARY

In view of this, this application provides a battery control circuit, a charging control method, and an electronic device, as defined in the appended set of claims, to resolve at least one of the foregoing problems.

A first aspect of this application provides a battery control circuit, configured to control charging and discharging of a battery, and including a processor and one or more charging links. The battery includes one or more bare cells. The charging link is electrically connected to the bare cell and the processor. The processor determines, based on a type of the bare cell, a charging policy to be performed by the charging link.

In the foregoing design, the battery control circuit including the one or more charging links is correspondingly provided for the battery including the one or more bare cells, and the processor determines, based on the type of the bare cell, the charging policy to be performed by the charging link, to reduce bias current and bias voltage problems of conventional series and parallel batteries, and fully utilize performance of the battery.

In a possible design, the charging link includes a charging management chip, and the charging management chip is electrically connected to the processor and the bare cell. The processor controls the charging management chip to process an input current and an input voltage of the charging link, and output a charging current and a charging voltage to the bare cell.

In the foregoing design, the charging management chip is disposed in the charging link, so that the charging management chip processes an input circuit and an input voltage of each charging link, to provide an appropriate charging current and charging voltage for a corresponding bare cell.

In a possible design, the battery control circuit further includes a charging port. One end of the charging port is electrically connected to a power supply unit to receive the input current and the input voltage output by the power supply unit. The other end of the charging port is electrically connected to the charging management chip to output the input current and the input voltage to the charging management chip. The processor is electrically connected to the charging port to detect a voltage change of the charging port, so as to determine a status of an electrical connection between the battery control circuit and the power supply unit.

In the foregoing design, the processor is electrically connected to the charging port to determine a status of an electrical connection between the battery and the power supply unit.

In a possible design, the number of charging links is the same as that of bare cells, and the charging link is electrically connected to the bare cell in a one-to-one correspondence.

In the foregoing design, the charging link is connected to the bare cell in a one-to-one correspondence, to independently control charging and discharging of each bare cell, and fully utilize performance of each bare cell.

In a possible design, the battery control circuit further includes a coulometer. The coulometer is electrically connected between the bare cell and the processor. The processor monitors a voltage, a current, and/or an electricity quantity of a corresponding bare cell through the coulometer, and controls a charging process of a corresponding charging link based on a monitoring result.

In the foregoing design, the coulometer is disposed, so that the processor monitors a voltage, a current, and/or an electricity quantity of each bare cell.

In a possible design, the battery further includes several protection boards. The protection board is electrically connected to the bare cell. The protection board includes a storage unit configured to store information about a type of the corresponding connected bare cell. The charging management chip is electrically connected to the corresponding bare cell through the protection board. The processor receives, through communication between the charging management chip and the protection board, a feedback signal including the information, to determine a type of each bare cell.

In a possible design, the protection board is provided with a radio frequency chip, and the radio frequency chip is electrically connected to the storage unit. The charging management chip is provided with a radio frequency identification circuit. The processor receives the feedback signal through communication between the radio frequency identification circuit and the radio frequency chip.

In the foregoing design, the storage unit or the radio frequency chip is disposed on the protection board, so that the processor determines a type of a corresponding bare cell through communication between the charging management chip and a corresponding protection board.

In a possible design, the battery control circuit further includes a power management module. The power management module is electrically connected between the bare cell and the processor, and the processor controls discharging of the bare cell through the power management module.

In the foregoing design, the power management module is disposed in the battery control circuit, so that the processor controls discharging of the bare cell.

A second aspect of this application further provides an electronic device, including a battery. The battery includes several bare cells. The electronic device further includes the battery control circuit according to any one of the foregoing implementations, configured to control charging and discharging of the battery.

A third aspect of this application provides a charging control method, used for controlling charging of a battery. The charging control method is applied to a battery control circuit. The battery includes several bare cells. The charging control method includes:
when it is determined that the battery is electrically connected to a power supply unit, determining a type of the several bare cells in the battery; and
performing a corresponding charging policy based on the determined type of the several bare cells.

In the foregoing design, the type of the several bare cells in the battery is determined, so that the corresponding charging policy is performed based on the determined type of the bare cells, to fully utilize performance of each bare cell.

In a possible design, the charging policy includes: charging the bare cell until the bare cell is fully charged; stopping charging the bare cell; determining that the power supply unit is electrically connected to the battery; and performing a recharging policy on the bare cell.

In the foregoing design, the recharging policy is performed when it is determined that an electrical connection is retained between the power supply unit and the battery, so that an electricity quantity of the bare cell remains in a fully charged state.

In a possible design, when it is determined that the bare cell is a type-1 bare cell, the charging the bare cell until the bare cell is fully charged includes:
when an electricity quantity of the bare cell is less than a first preset electricity quantity threshold, charging the bare cell in a fast charging mode until the bare cell is fully charged; or
when an electricity quantity of the bare cell is greater than or equal to the first preset electricity quantity threshold, charging the bare cell in a conventional charging mode until the bare cell is fully charged.

In the foregoing design, when the electricity quantity of the bare cell is less than the first preset electricity quantity threshold, the fast charging mode is triggered, so that the bare cell quickly reaches a fully charged state during first charging. In addition, when the electricity quantity of the bare cell is greater than or equal to the first preset electricity quantity threshold, the conventional charging mode is triggered, to ensure safe charging of the bare cell. In this way, switching between the fast charging mode and the conventional charging mode can reduce the number of times of high-voltage fast charging of the bare cell, and extend service life of the bare cell.

In a possible design, when it is determined that the bare cell is a type-2 bare cell, the charging the bare cell until the bare cell is fully charged includes: charging the bare cell in a conventional charging mode until the bare cell is fully charged.

In the foregoing design, the conventional charging mode is used for the type-2 bare cell, so that the bare cell safely reaches a fully charged state during first charging.

In a possible design, the performing a recharging policy on the bare cell includes:
when duration in which the power supply unit is electrically connected to the bare cell is less than or equal to a preset duration threshold, determining whether an electricity quantity of the bare cell is less than a second preset electricity quantity threshold, where
when the electricity quantity of the bare cell is greater than or equal to the second preset electricity quantity threshold, continuing to determine whether duration in which the power supply unit is electrically connected to the bare cell is greater than the preset duration threshold, until duration in which the power supply unit is electrically connected to the bare cell is greater than the preset duration threshold; or
when the electricity quantity of the bare cell is less than the second preset electricity quantity threshold, charging the bare cell in a conventional charging mode, until the bare cell is fully charged, and performing the recharging policy, or until the power supply unit is disconnected from the battery, and ending the charging process.

In the foregoing design, when the power supply unit is in a short-term presence state and the electricity quantity of the bare cell is less than the second preset electricity quantity threshold, the bare cell is recharged in the conventional charging mode. This can reduce damage to the bare cell, reduce risks such as lithium precipitation and overcharging, maintain health of the bare cell, extend service life of the bare cell, and even reduce risks of short circuits and fire accidents of the bare cell.

In a possible design, when it is determined that the bare cell is a type-1 bare cell, the performing a recharging policy on the bare cell further includes:
when duration in which the power supply unit is electrically connected to the bare cell is greater than the preset duration threshold, determining whether an electricity quantity of the bare cell is less than a third preset electricity quantity threshold;
when the electricity quantity of the bare cell is less than the third preset electricity quantity threshold, charging the bare cell in a fast charging mode, and detecting an electricity quantity;
when the electricity quantity of the bare cell is less than a fourth preset electricity quantity threshold, continuing to charge the bare cell in the fast charging mode until an electricity quantity of the bare cell is greater than or equal to the fourth preset electricity quantity threshold; and
when the electricity quantity of the bare cell is greater than or equal to the fourth preset electricity quantity threshold, stopping charging the bare cell and performing the recharging policy, or waiting until the power supply unit is disconnected from the battery and ending the charging process.

In the foregoing design, when the power supply unit is in a long-term presence state and the electricity quantity of the bare cell is less than the third preset electricity quantity threshold, the bare cell is recharged in the fast charging mode, until an electricity quantity of the bare cell reaches the fourth preset electricity quantity threshold, and then charging stops. In this way, when the electricity quantity of the bare cell is less than the third preset electricity quantity threshold, the fast charging mode is used for charging, to increase a charging speed. In addition, when the electricity quantity of the bare cell is equal to the fourth preset electricity quantity threshold, charging stops, to prevent the bare cell from remaining in a long-term high-voltage state and extend service life of the bare cell.

In a possible design, the charging control method further includes:
in a possible design, when it is determined that the bare cell is a type-2 bare cell, the performing a recharging policy on the bare cell further includes:
when duration in which the power supply unit is electrically connected to the bare cell is greater than the preset duration threshold, determining whether an electricity quantity of the bare cell is less than a third preset electricity quantity threshold;
when the electricity quantity of the bare cell is less than the third preset electricity quantity threshold, charging the bare cell in the conventional charging mode;
when an electricity quantity of the bare cell is less than a fifth preset electricity quantity threshold, continuing to charge the bare cell in the conventional charging mode until an electricity quantity of the bare cell is greater than or equal to the fifth preset electricity quantity threshold; and
when the electricity quantity of the bare cell is greater than or equal to the fifth preset electricity quantity threshold, stopping charging the bare cell and performing the recharging policy, or waiting until the power supply unit is disconnected from the battery and ending the charging process.

In the foregoing design, the bare cell is recharged in the conventional charging mode, until the electricity quantity of the bare cell reaches the fifth preset electricity quantity threshold, and then charging stops. In this way, when the electricity quantity of the bare cell is less than the third preset electricity quantity threshold, the conventional charging mode is used for charging, so that the bare cell remains in a high electricity quantity state. In addition, when the electricity quantity of the bare cell is equal to the fifth preset electricity quantity threshold, charging stops, to prevent the bare cell from remaining in a long-term high-voltage state and extend service life of the bare cell.

When the duration in which the power supply unit is electrically connected to the bare cell is greater than the preset duration threshold and the electricity quantity of the bare cell is greater than or equal to the third preset electricity quantity threshold, whether duration in which the power supply unit is electrically connected to the bare cell is greater than the preset duration threshold is determined, until an electricity quantity of the bare cell is less than the third preset electricity quantity threshold.

In the foregoing design, the preset duration threshold and the third preset electricity quantity threshold are set, so that the bare cell is charged only when the power supply unit is in the long-term presence state and the electricity quantity of the bare cell is less than the third preset electricity quantity threshold. This can reduce the number of times of high-voltage charging of the bare cell, and extend service life of the bare cell.

### BRIEF DESCRIPTION OF DRAWINGS

To describe the technical solutions of the embodiments of this application more clearly, the following briefly describes the accompanying drawings of the embodiments. It should be understood that, the following accompanying drawings show only some embodiments of this application, which cannot be considered as a limitation.
FIG. 1 is a schematic structural diagram of an electronic device according to an embodiment of this application;
FIG. 2 is a schematic three-dimensional diagram of a battery shown in FIG. 1;
FIG. 3 is a partial schematic exploded view of a battery body shown in FIG. 2;
FIG. 4 is a schematic structural diagram of a battery body shown in FIG. 3;
FIG. 5 is a schematic diagram of a battery shown in FIG. 4 connected to a protection board;
FIG. 6 is a functional block diagram of an electronic device connected to a power supply unit according to an embodiment of this application;
FIG. 7 is a partial schematic exploded view of a battery according to another embodiment of this application;
FIG. 8 is a functional block diagram of an electronic device connected to a power supply unit according to another embodiment of this application;
FIG. 9 is a partial schematic exploded view of a battery body according to another embodiment of this application;
FIG. 10 is a schematic flowchart of a battery control method according to an embodiment of this application;
FIG. 11 is a schematic flowchart of step S3 shown in FIG. 10; and
FIG. 12 is a schematic flowchart of step S31 to step S35 shown in FIG. 11.

Description of main component symbols:
power supply unit: 200; electronic device: 100 and 100a; battery: 10 and 10a; battery body: 1, 1a, and 1b; housing: 11;
bare cell: 12; first bare cell: 13, 13a, and 13b; separator: S; first electrode plate: P1; second electrode plate: P2;
first sub-tab: 131; second sub-tab: 132; first tab: 134 and 134a; second tab: 135 and 135a;
first electrode plate combination: C1; third electrode plate combination: C3; second bare cell: 14, 14a, and 14b; third electrode plate: P3;
fourth electrode plate: P4; third sub-tab: 141; fourth sub-tab: 142; third tab: 144 and 144a; fourth tab: 145;
second electrode plate combination: C2; fourth electrode plate combination: C4; battery control circuit: 2 and 2a; processor: 21; charging link: 22;
first charging link: 221; first charging management chip: 222; first charging port: 223; first overvoltage protection circuit: 231;
first coulometer: 241; second charging link: 224; second charging management chip: 225; second charging port: 226;
second overvoltage protection circuit: 232; second coulometer: 242; coulometer: 240; connector: 25; power management module: 26;
protection board: 3; first protection board: 31; second protection board: 32; and third protection board: 33.

### DESCRIPTION OF EMBODIMENTS

The technical solutions in the embodiments of this application are clearly and completely described in the following with reference to the accompanying drawings in the embodiments of this application. Apparently, the described embodiments are merely some rather than all of the embodiments of this application.

It should be noted that when a component is referred to as "being fastened to" another component, the component may be directly on the another component, or an intervening component may be present. When a component is considered to be "connected to" another component, the component may be directly connected to the another component, or an intervening component may also be present. When a component is considered to be "arranged" on another component, the component may be directly disposed on the another component or an intervening component may also be present. The terms "vertical", "horizontal", "left", and "right" and similar expressions used in this specification are merely used for the purpose of description.

In the embodiments of this application, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features.

In the embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by the sentence "including a" does not exclude that there are still other same elements in the process, method, object, or apparatus which includes the element.

"And/or" in the embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Some implementations of this application are described in detail. The implementations and features in the implementations may be combined with each other in the case of no conflict.

Batteries are widely used in various electronic devices to supply power to the electronic devices. As performance of electronic devices becomes increasingly high, electricity consumption of batteries becomes increasingly fast. As electronic devices are used in an increasing number of application scenarios, batteries with a single characteristic cannot well meet user requirements. In a conventional electronic device, to improve battery life of the electronic device, a plurality of batteries with a same capacity and made of a same material are usually connected in series and/or in parallel for use. In addition, the plurality of batteries can be charged only in a same charging mode, to reduce problems such as a bias current and a bias voltage during battery charging, and reduce impact on battery life. Clearly, in the conventional solution in which a plurality of batteries are connected in series and/or in parallel for use, a battery capacity and battery life can be improved, but the single battery characteristic and charging mode cannot well meet user requirements for multi-scenario use and fast charging.

In view of this, the embodiments of this application provide a battery, an electronic device, and a charging control method, and the battery has different characteristics, to fully utilize performance of the battery and meet user requirements for multi-scenario use and fast charging.

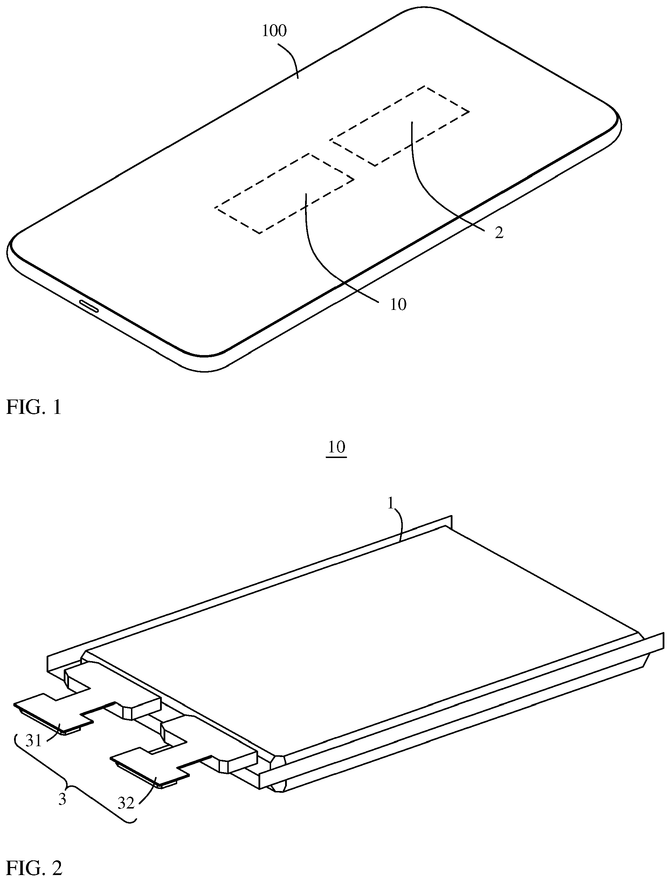

As shown in FIG. 1, an embodiment of this application provides an electronic device 100, including a battery 10 and a battery control circuit 2 that are electrically connected to each other. The electronic device 100 includes but is not limited to a mobile terminal or a fixed terminal that includes a battery, for example, a mobile phone, a tablet computer, a notebook computer, an ultra-mobile personal computer (ultra-mobile personal computer, UMPC), a handheld computer, an intercom, a netbook, a point of sales (Point of sales, POS) machine, a personal digital assistant (personal digital assistant, PDA), a wearable device, a virtual reality device, a wireless USB flash drive, a Bluetooth speaker/headset, a vehicle-mounted device, an automobile data recorder, a security device, or a medical device.

In this embodiment of this application, a specific form of the electronic device 100 is not particularly limited, and a mobile phone is merely used as an example to describe how electronic device 100 implements specific technical solutions in the embodiments.

The battery 10 is configured to supply power to an electrical device in the electronic device 100. Specifically, the electrical devices include but are not limited to one or more of a display, a camera module, a speaker, and a SIM module. This is not specifically limited herein.

The battery control circuit 2 is configured to control charging and discharging of the battery 10.

Further, as shown in FIG. 2, the battery 10 includes a battery body 1 and a protection board 3.

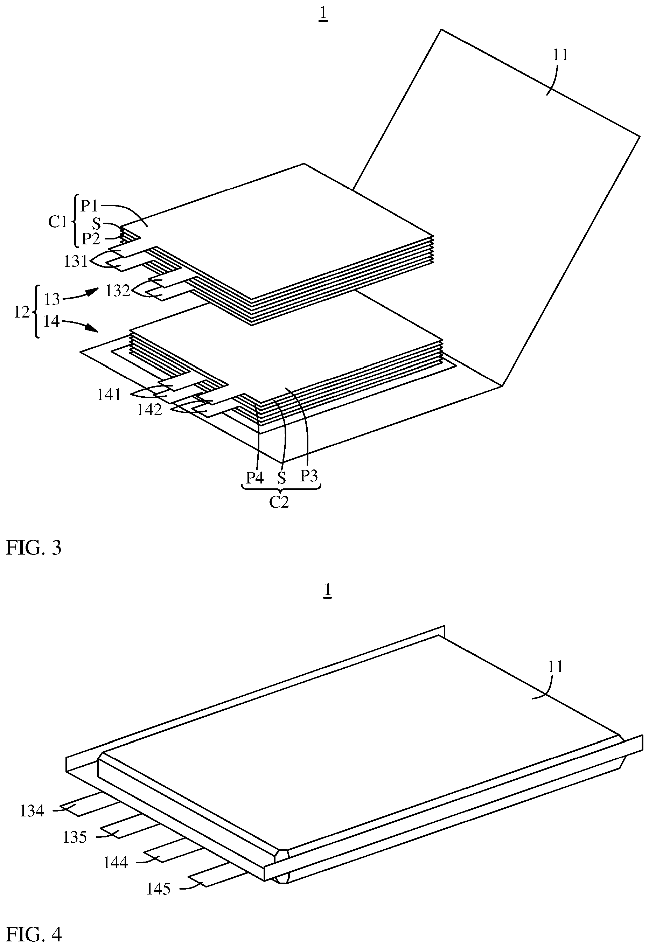

Further, as shown in FIG. 3, the battery body 1 includes a housing 11 and several bare cells 12. The housing 11 is configured to cover the bare cells 12, and electrolyte is packaged in the housing. In this way, the bare cells 12 are immersed in the electrolyte. The housing 11 is configured to accommodate the bare cells 12 and the electrolyte, and is further configured to protect the bare cells 12, to reduce risks of short circuits and fire accidents of the bare cells 12 due to collision or scratching. A material of the housing 11 is not limited in this application. For example, the housing 11 includes but is not limited to an aluminum-plastic film and a steel shell.

In some embodiments, design parameters, such as structures, component materials, material proportions, manufacturing processes, and electrode plate designs, of all of the several bare cells 12 may be completely the same, or any one of the foregoing five parameters may be different. That is, the several bare cells 12 in the battery body 1 may be the same or different. Further, as shown in FIG. 4, in this embodiment of this application, the number of bare cells 12 in the housing 11 is not limited. For clarity of description, as shown in FIG. 3, an example in which the several bare cells 12 in the battery body 1 include two bare cells, such as a first bare cell 13 and a second bare cell 14, is used for description.

Structures of the bare cells 12 are not limited in this application. For example, the first bare cell 13 may have a laminated structure or a wound structure, and the second bare cell 14 may have a laminated structure or a wound structure. As shown in FIG. 3, in this embodiment of this application, an example in which both the first bare cell 13 and the second bare cell 14 have a laminated structure is used for description.

According to the invention, the first bare cell 13 and the second bare cell 14 are immersed in a same type of electrolyte, where the first bare cell 13 and the second bare cell 14 belong to different cell types. The first bare cell 13 is a type-1 bare cell, and the second bare cell 14 is a type-2 bare cell. The type-1 bare cell is a fast charging cell, and the type-2 bare cell is a cell with high energy density and high temperature resistance. The fast charging cell is a cell with a fast charging capability, and is a cell capable of implementing a charging process with a charging ratio (C ratio) not less than a preset threshold. The preset threshold is usually greater than 0.7C. The cell with high energy density and high temperature resistance is a cell with high volumetric energy density or mass energy density and capable of stably operating at high temperature for a long time. The high energy density usually means that volumetric energy density is greater than 600 Wh/L. The high temperature resistance means that the cell can continuously and stably operate at a temperature above 30°C.

For example, the first bare cell 13 is formed by stacking several first electrode plate combinations C1. A separator S is further disposed between adjacent first electrode plate combinations C1. Each first electrode plate combination C1 includes several first electrode plates P1, separators S, and second electrode plates P2. A separator S is disposed between a first electrode plate P1 and a second electrode plate P2 that are adjacent, to prevent a short circuit between the first electrode plate P1 and the second electrode plate P2.

The first electrode plate P1 and the second electrode plate P2 have opposite polarities. The first electrode plate P1 and the second electrode plate P2 each include a current collector and an electrode material (not shown in the figure) covering the current collector, and electrode materials on the first electrode plate P1 and the second electrode plate P2 are different. In this way, the first bare cell 13 can store electrical energy or release electrical energy through an electrochemical reaction produced by the electrode materials on the first electrode plate P1 and the second electrode plate P2.

In this embodiment, each first electrode plate P1 is correspondingly connected to a first sub-tab 131, and each second electrode plate P2 is correspondingly connected to a second sub-tab 132. One end of the first sub-tab 131 and one end of the second sub-tab 132 are respectively connected to a corresponding first electrode plate P1 and a corresponding second electrode plate P2, and the other end extends in a direction toward an outer side of the battery body 1.

Because a corresponding sub-tab (for example, the first sub-tab 131 or the second sub-tab 132) is connected to a corresponding electrode plate (for example, the first electrode plate P1 or the second electrode plate P2), the corresponding sub-tab and the corresponding electrode plate have a same polarity. For example, the first sub-tab 131 and the first electrode plate P1 have a same polarity, and the second sub-tab 132 and the second electrode plate P2 have a same polarity.

In addition, because corresponding electrode plates (for example, the first electrode plate P1 and the second electrode plate P2) have opposite polarities, the first sub-tab 131 and the second sub-tab 132 have opposite polarities.

As shown in FIG. 4, in this embodiment of this application, first sub-tabs 131 of the first bare cell 13 are electrically connected to each other to form a first tab 134, and second sub-tabs 132 of the first bare cell 13 are electrically connected to each other to form a second tab 135. The first tab 134 and the second tab 135 are configured to lead out a positive electrode and a negative electrode of the first bare cell 13 respectively, to serve as contacts during charging and discharging of the first bare cell 13.

As shown in FIG. 3, similarly, in this embodiment of this application, the second bare cell 14 is formed by stacking several second electrode plate combinations C2. A separator S is further disposed between adjacent second electrode plate combinations C2. Each second electrode plate combination C2 includes a third electrode plate P3, a separator S, and a fourth electrode plate P4. Each third electrode plate P3 is correspondingly connected to a third sub-tab 141, and each fourth electrode plate P4 is correspondingly connected to a fourth sub-tab 142. One end of the third sub-tab 141 and one end of the fourth sub-tab 142 are respectively connected to a corresponding third electrode plate P3 and a corresponding fourth electrode plate P4, and the other end extends in a direction toward an outer side of the battery body 1. The third sub-tab 141 and the third electrode plate P3 have a same polarity, and the fourth sub-tab 142 and the fourth electrode plate P4 have a same polarity. The third sub-tab 141 and the fourth sub-tab 142 have opposite polarities. In this embodiment of this application, the third sub-tab 141 is a negative-electrode sub-tab, and the fourth sub-tab 142 is a positive-electrode sub-tab.

As shown in FIG. 4, in this embodiment of this application, third sub-tabs 141 of the second bare cell 14 are electrically connected to each other to form a third tab 144, and fourth sub-tabs 142 of the second bare cell 14 are electrically connected to each other to form a fourth tab 145. The third tab 144 and the fourth tab 145 are configured to lead out a negative electrode and a positive electrode of the second bare cell 14 respectively, to serve as contacts during charging and discharging of the second bare cell 14.

As shown in FIG. 4, the first tab 134, the second tab 135, the third tab 144, and the fourth tab 145 are all exposed from the housing 11. In this embodiment of this application, the first tab 134, the second tab 135, the third tab 144, and the fourth tab 145 are all exposed from a same side of the housing 11. The first tab 134 is disposed near the second tab 135. The third tab 144 is disposed near the fourth tab 145. The first tab 134 and the second tab 135 jointly form a charging and discharging port of the first bare cell 13. The third tab 144 and the fourth tab 145 jointly form a charging and discharging port of the second bare cell 14. In this way, the first bare cell 13 and the second bare cell 14 can be independently charged or independently discharged.

In this embodiment of this application, the first bare cell 13 and the second bare cell 14 are directly stacked. Therefore, a separator S is further disposed between a first electrode plate combination C1 and a second electrode plate combination C2 that are adjacent.

In another embodiment, the first bare cell 13 and the second bare cell 14 each may alternatively be coated with an insulating housing to isolate the first bare cell 13 and the second bare cell 14.

In another embodiment, system designs of the first bare cell 13 and the second bare cell 14 may alternatively be the same, except that locations of tabs are different. The system designs being the same means that design parameters, such as materials, compacted density, and coating weights, of positive electrode plates of the first bare cell 13 and the second bare cell 14 are the same, and negative electrode plates of the first bare cell 13 and the second bare cell 14 also have a same design. In this way, the first bare cell 13 and the second bare cell 14 have a same design capacity and characteristic.

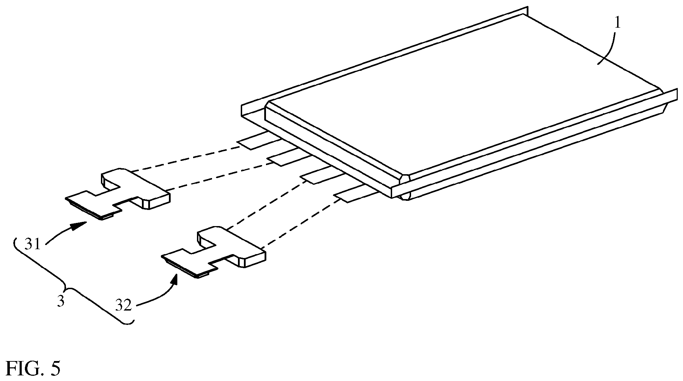

Further, as shown in FIG. 5, the protection board 3 is a circuit board integrated with a sampling resistor and a current protector. Several protection boards 3 are disposed on a surface of the housing 11 of the battery body 1, and are electrically connected to tabs outside the housing 11, to reduce a probability of overcharging, overdischarging, overcurrent, short circuits, ultrahigh-temperature charging, and the like of the battery.

In this embodiment, the number of protection boards 3 corresponds to the number of bare cells. For example, in this embodiment of this application, the number of protection boards 3 is two, for example, including a first protection board 31 and a second protection board 32. The first protection board 31 is correspondingly electrically connected to the first bare cell 13. The second protection board 32 is correspondingly electrically connected to the second bare cell 14.

One end of the first protection board 31 is electrically connected to the first tab 133 and the second tab 135 of the first bare cell 13, and the other end is used to receive electric energy and transmit the electric energy to the first bare cell 13 through the first tab 133 and the second tab 135; or the first bare cell 13 releases electrical energy through the first protection board 31.

One end of the second protection board 32 is electrically connected to the second tab 144 and the fourth tab 145 of the second bare cell 14, to receive electric energy and transmit the electric energy to the second bare cell 14 through the third tab 144 and the fourth tab 145; or the second bare cell 14 releases electrical energy through the second protection board 32.

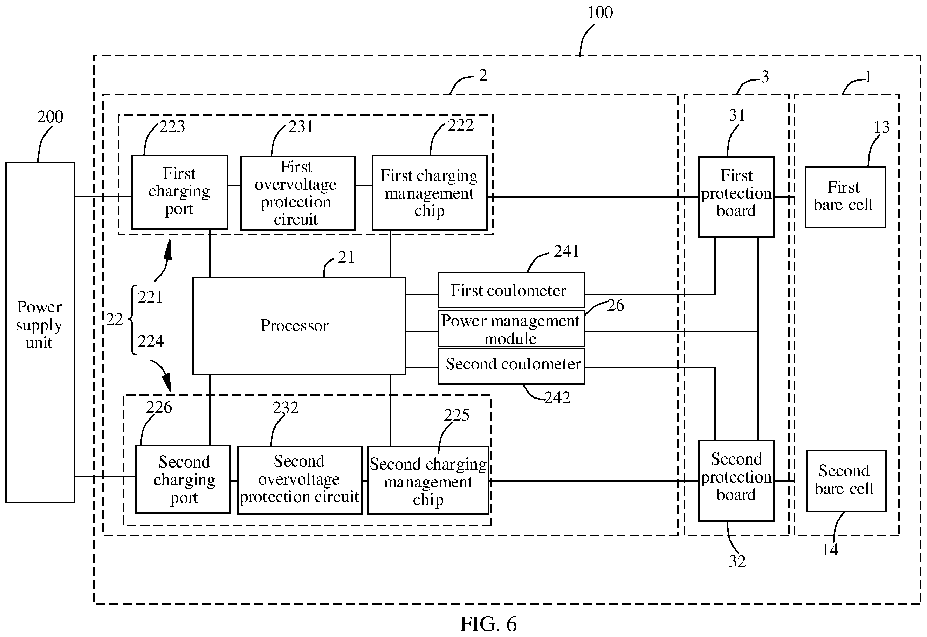

Further, FIG. 6 is a functional block diagram of the electronic device 100 connected to a power supply unit 200. One end of the battery control circuit 2 is electrically connected to the power supply unit 200, and the other end is electrically connected to the battery body 1 through a protection board (for example, the first protection board 31 and the second protection board 32), to manage charging of the battery body 1 and detect parameters, such as a capacity, the number of cycles, and a health status, of the battery body 1.

The power supply unit 200 is configured to output a direct-current voltage. In some embodiments, the power supply unit 200 may be a wired charger with an adapter, a mobile power source, or the like.

Specifically, as shown in FIG. 6, in some embodiments, the battery control circuit 2 includes a processor 21 and several charging links 22. The several charging links 22 may be one charging link or a plurality of charging links. In this embodiment of this application, the number of the several charging links 22 is the same as that of the several bare cells 12, and the several charging links 22 are electrically connected to the several bare cells 12 in a one-to-one correspondence. The processor 21 is electrically connected to each charging link, to separately control each charging link to perform a different charging policy based on a type of each bare cell. One end of the several charging links 22 is electrically connected to the power supply unit 200, and the other end is electrically connected to a corresponding bare cell through a corresponding protection board. In this way, each bare cell (for example, the first bare cell 13 and second bare cell 14) is electrically connected to the power supply unit 200 through a corresponding protection board (for example, the first protection board 31 and second protection board 32) and a corresponding charging link 22 (for example, a first charging link 221 and a second charging link 224), to receive electric energy provided by the power supply unit 200.

In this embodiment of this application, the several charging links 22 include the first charging link 221 and the second charging link 224. The first charging link 221 includes at least a first charging management chip 222 and a first charging port 223. One end of the first charging management chip 222 is electrically connected to the first bare cell 13 through the first protection board 31. One end of the first charging port 223 is electrically connected to the power supply unit 200, to receive an input current and an input voltage that are output by the power supply unit 200. The other end of the first charging port 223 is electrically connected to the first charging management chip 222, to input the received input current and input voltage to the first charging management chip 222.

The first charging management chip 222 is further electrically connected to the processor 21. In this way, under the control of the processor 21, after receiving, through the first charging port 223, the voltage and the current that are input from the power supply unit 200, the first charging management chip 222 processes the input voltage and the input current to output a charging voltage and a charging current to the first bare cell, so as to implement safe and efficient charging. For example, in some embodiments, after the power supply unit 200 is electrically connected to the first charging port 223, a maximum charging voltage input to the first charging port 223 is 10 V, and a maximum charging current input is 5 A. Under the control of the processor 21, the first charging management chip 222 is configured to reduce the maximum charging voltage of 10 V to 5 V and increase the maximum charging current of 5 V to 10 A, to make a charging voltage and a charging current meet safety regulations of the first bare cell 13, and reduce safety risks of the battery body 1.

The first charging port 223 is further electrically connected to the processor 21. In this way, the processor 21 detects a voltage change on the first charging port 223 to determine a status of an electrical connection between the first charging link 221 in the battery control circuit 2 and the power supply unit 200. That is, the processor 21 detects a voltage change on the first charging port 223 to determine a status of an electrical connection between the power supply unit 200 and the battery 10.

The first charging port 223 may be a USB interface conforming to universal serial bus (universal serial bus, USB) standard specifications, and may be specifically a mini-USB interface, a micro-USB interface, a USB type-C interface, or the like. This is not specifically limited herein. Corresponding to the first charging port 223, the power supply unit 200 may alternatively be a device supporting the universal serial bus standard specifications.

The second charging link 224 includes a second charging management chip 225 and a second charging port 226. One end of the second charging management chip 225 is electrically connected to the second bare cell 14 through the second protection board 32. The other end of the second charging management chip 225 is electrically connected to the power supply unit 200 through the second charging port 226.

A structure of the second charging link 224 is generally the same as that of the first charging link 221, and component functions and operating principles are similar to those of the first charging link 221. For details, refer to the descriptions of the first charging link 221. Details are not described herein again.

Both the first charging port 223 and the second charging port 226 are electrically connected to the processor 21. The processor 21 may detect voltage changes on the first charging port 223 and the second charging port 226 to determine whether the electronic device 100 is connected to the corresponding power supply unit 200. The processor 21 is further electrically connected to the first charging management chip 222 and the second charging management chip 225, to control charging of the first bare cell 13 and the second bare cell 14 through the first charging management chip 222 and the second charging management chip 225 respectively.

An operating principle of the battery control circuit: 2 is generally as follows:
Further, as shown in FIG. 6, when the power supply unit 200 is electrically connected to the electronic device 100, the power supply unit 200 is electrically connected to the first charging port 223 and the second charging port 226. The processor 21 detects that voltages on the first charging port 223 and the second charging port 226 change. In this case, the processor 21 communicates with the power supply unit 200 through the first charging port 223 and the second charging port 226 to determine various charging parameters, for example, a maximum input voltage and a maximum input current. Then the processor 21 controls the first charging management chip 222 and the second charging management chip 225 to process an input voltage and an input current, to implement independent charging of the first bare cell 13 and the second bare cell 14.

In the battery 10 provided in this embodiment of this application, several different bare cells are integrated in the same battery body 1, so that the battery 10 has different characteristics. In this way, the battery 10 can meet usage requirements of users in at least two scenarios. In the battery 10, different bare cells further lead out corresponding positive and negative electrode tabs as charging and discharging contacts, so that different bare cells have independent charging and discharging functions. Further, the first charging link 221 and the second charging link 224 of the battery control circuit 2 provided in this application are correspondingly connected to tabs of the first bare cell 13 and the second bare cell 14 respectively, to simultaneously perform charging based on different characteristics of the first bare cell 13 and the second bare cell 14, so as to fully utilize performance of the battery 10 while implement fast charging.

In some embodiments, before charging, the processor 21 may further determine cell types of the first bare cell 13 and the second bare cell 14 through the first charging management chip 222 and the second charging management chip 225 respectively, to respectively perform corresponding charging policies based on the cell types of the first bare cell 13 and the second bare cell 14.

For example, in some embodiments, the first protection board 31 correspondingly connected to the first bare cell 13 and the second protection board 32 correspondingly connected to the second bare cell 14 each are provided with a storage unit (not shown in the figure). The storage unit is configured to store information indicating a bare cell type of the first bare cell 13 or the second bare cell 14. After detecting that the power supply unit 200 is electrically connected to the electronic device 100, the processor 21 communicates with the corresponding first protection board 31 and second protection board 32 through the first charging management chip 222 and the second charging management chip 225 respectively, so that the processor 21 receives a feedback signal including the information, and determines the cell types of the first bare cell 13 and the second bare cell 14 that are correspondingly connected to the first charging management chip 222 and the second charging management chip 225 respectively.

Specifically, in some embodiments, the processor 21 outputs detection signals to the first protection board 31 and the second protection board 32 through the first charging management chip 222 and the second charging management chip 225 respectively. After receiving the corresponding detection signals, the first protection board 31 and the second protection board 32 each output a feedback signal to the processor 21. In this way, the processor 21 determines the corresponding bare cell types of the first bare cell 13 and the second bare cell 14 based on received feedback signals, so as to respectively match corresponding charging control methods for the first bare cell 13 and the second bare cell 14 through corresponding charging links.

For another example, in some embodiments, the first protection board 31 and the second protection board 32 each are provided with a radio frequency chip, and two radio frequency chips are electrically connected to the storage units on the first protection board 31 and the second protection board 32 respectively. The first charging management chip 222 and the second charging management chip 225 each are provided with a corresponding radio frequency identification circuit. In this way, the processor 21 may communicate with the radio frequency chips of the first protection board 31 and the second protection board 32 through radio frequency identification circuits of the first charging management chip 222 and the second charging management chip 225 respectively, to receive feedback signals that include corresponding bare cell type information and that are output by the radio frequency chips, and determine the bare cell types of the first bare cell 13 and the second bare cell 14, so as to match corresponding charging control methods.

In this way, the battery control circuit 2 can control the first bare cell 13 and the second bare cell 14 to respectively adapt to different charging parameters for charging. For example, the first bare cell 13 and the second bare cell 14 may correspond to different charging currents, different charging ratios, different charging time, and/or different cut-off charging voltages. For example, in this embodiment of this application, the first bare cell 13 is a fast charging cell, and the second bare cell 14 is a cell with high energy density and high temperature resistance. The first bare cell 13 and the second bare cell 14 are independently charged at different charging currents through the first charging link 221 and the second charging link 224 respectively. The first bare cell 13 is charged at a current with a charging ratio greater than 0.7C, the second bare cell 14 is charged at a current with a charging ratio less than 0.7C, and the second bare cell 14 can stably operate at a temperature above 30°C. In this way, the battery 10 can meet battery usage requirements of users in high-temperature scenarios, and can also meet fast charging requirements of users.

Still as shown in FIG. 6, in some embodiments, the battery control circuit 2 further includes several overvoltage protection circuits and several coulometers. The number of the several overvoltage protection circuits and the number of the several coulometers both correspond to the number of bare cells. For example, the battery control circuit 2 includes two overvoltage protection circuits and two coulometers. Each overvoltage protection circuit and each coulometer are disposed with respect to a corresponding charging link. For example, a first overvoltage protection circuit 231 and a first coulometer 241 are disposed with respect to the first charging link 221, and a second overvoltage protection circuit 232 and a second coulometer 242 are disposed with respect to the second charging link 224.

The first overvoltage protection circuit 231 is electrically connected to the first charging port 223 and the first charging management chip 222, to protect electronic devices from impact of an instantaneous high voltage. The first coulometer 241 is electrically connected between the first protection board 31 and the processor 21. That is, the first coulometer 241 is electrically connected between the first bare cell 13 of the battery 10 and the processor 21. In this way, the processor 21 can measure a voltage, a current, and an electricity quantity of the first bare cell 13 through the first coulometer 241, and control charging of the first charging link 221 based on detected data.

Correspondingly, an electrical connection relationship and functions of the second overvoltage protection circuit 232 and the second coulometer 242 in the second charging link 224 are the same as the electrical connection relationship and the functions of the first overvoltage protection circuit 231 and the first coulometer 241 in the first charging link 221. Details are not described herein again.

The battery control circuit 2 further includes a memory (not shown in the figure). The memory includes instructions related to charging control methods corresponding to different bare cell types. In this way, after determining the cell types of the first bare cell 13 and the second bare cell 14, the processor 21 can invoke corresponding instructions from the memory to adjust a current and a voltage that are input from the power supply unit 200, so as to control charging of the first bare cell 13 and the second bare cell 14.

In some embodiments of this applications, the first charging port 223 and the second charging port 226 in the battery control circuit 2 may alternatively be integrated into a shared charging port. In this way, charging currents can be simultaneously provided for the first charging link 221 and the second charging link 224 through an electrical connection between the shared charging port and the power supply unit 200.

In some embodiments, the battery control circuit 2 further includes a power management module 26. The power management module 26 is electrically connected between the bare cells (for example, the first bare cell 13 and the second bare cell 14) and the processor 21. The processor 21 controls, through the power management module 26, the bare cells of the battery body 1 to supply power to other electrical components of the electronic device 100, for example, an internal memory, a display, a camera, or a wireless communication module.

It can be understood that a form of the battery control circuit 2 is not limited in this application. In some embodiments, the battery control circuit 2 may alternatively be integrated as a control chip.

The number of sub-tabs on each electrode plate is not limited in this embodiment of this application. In some other embodiments, a person skilled in the art may dispose several sub-tabs on each electrode plate according to an actual requirement.

The number of electrode plate combinations in each bare cell (for example, the first bare cell 13 and second bare cell 14) is not limited in this embodiment of this application.

In some embodiments, when the several bare cells in the battery body 1 each are coated with a housing, the several bare cells may be separately immersed in different electrolyte.

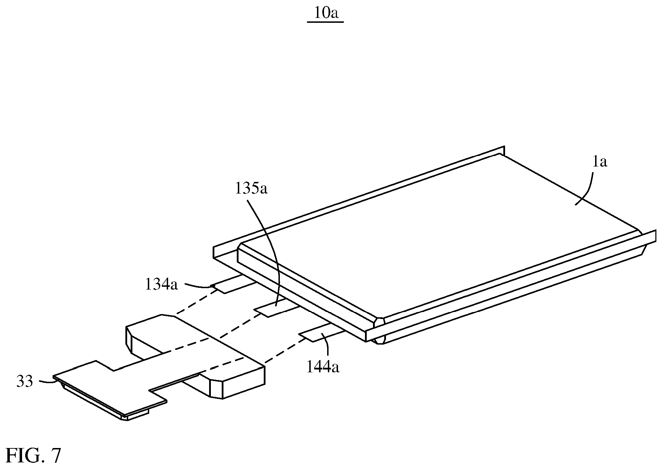

Further, as shown in FIG. 7, this application further provides a battery 10a, including a battery body 1a and a third protection board 33. A structure of the battery body 1a is generally the same as that of the battery body 1. For example, the battery body 1a also includes a first bare cell 13 and a second bare cell 14. A difference between the structure of the battery body 1a and the structure of the battery body 1 lies in that the battery body 1a includes a first tab 134a, a second tab 135a, and a third tab 144a. That is, in this embodiment, the first bare cell 13 and the second bare cell 14 of the battery body 1a share one tab, and the first bare cell 13 and the second bare cell 14 form two independent charging and discharging contacts through the three tabs. In this way, compared with the battery body 1, in the battery body 1a, complexity of the battery body can be further reduced, to reduce manufacturing costs.

For example, still as shown in FIG. 3, in this embodiment of this application, the first tab 134a and the third tab 144a are formed in a same manner as that of the first tab 134 and the third tab 144 in the battery body 1. To be specific, the first tab 134a is formed by several first sub-tabs 131 of the first bare cell 13 that are electrically connected to each other, and the third tab 144a is formed by several fourth sub-tabs 142 of the second bare cell 14 that are electrically connected to each other. The second tab 135a is formed in a different manner from that of the second tab 135 in the battery body 1. Specifically, the second tab 135a is formed by several second sub-tabs 132 of the first bare cell 13 and several third sub-tabs 141 of the second bare cell 14 that are electrically connected to each other. That is, in the battery body 1a, the second tab 135 and the third tab 144 in the battery body 1 are connected to each other, so that the first bare cell 13 and the second bare cell 14 share one tab, and therefore one tab is omitted.

Still as shown in FIG. 7, in this embodiment of this application, the first tab 134a and the second tab 135a jointly form a charging and discharging port of the first bare cell 13, and the second tab 135a and the third tab 144a jointly form a charging and discharging port of the second bare cell 14.

As shown in FIG. 3, in this embodiment of this application, projections of the second sub-tab 132 and the third sub-tab 141 in a thickness direction of the battery body 1a are aligned with each other, to facilitate an electrical connection between the second sub-tab 132 and the third sub-tab 141.

The number of tabs in the battery 10 is not limited in this application, provided that the number of tabs in the battery 10 is greater than or equal to 3, so that at least two cells are formed in the battery 10. For example, in another embodiment, four or more tabs may alternatively be formed in the battery 10/10a.

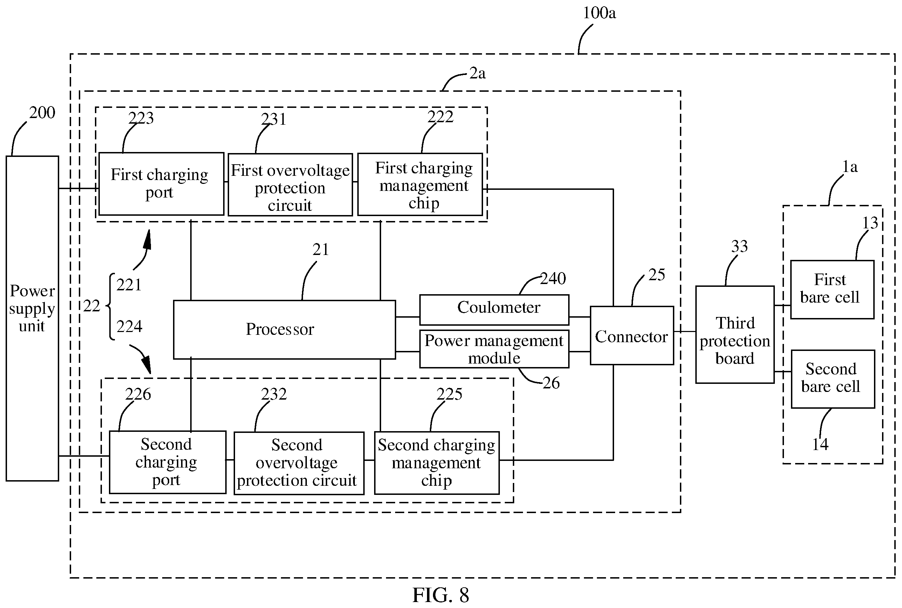

It can be understood that, in this embodiment of this application, corresponding to a design of the battery body 1a, the battery body 1a includes only one protection board, for example, the third protection board 33. As shown in FIG. 8, one end of the third protection board 33 is electrically connected to the power supply unit 200 through a battery control circuit 2a, and the other end is electrically connected to the battery body 1a, to output a charging current input from the power supply unit 200 to the first bare cell 13 and the second bare cell 14 in the battery body 1a.

Still as shown in FIG. 8, in this embodiment of this application, a structure of the third protection board 33 is generally the same as that of the first protection board 31. A difference between the third protection board 33 and the first protection board 31 lies in that the third protection board 33 is correspondingly connected to the three tabs of the battery body 1a. In this way, the battery body 1a shares the second tab 135a through the third protection board 33.

Further, as shown in FIG. 8, an embodiment of this application further provides an electronic device 100a, including the battery 10a (that is, the battery body 1a and the third protection board 33) and the battery control circuit 2a. The battery control circuit 2a is electrically connected to the battery body 1a through the third protection board 33, to independently control charging and discharging processes of the first bare cell 13 and the second bare cell 14 in the battery body 1a. It can be understood that, because the battery 10a includes only one third protection board 33, a circuit structure of the battery control circuit 2a is also different from that of the battery control circuit 2 in the battery body 1. Specifically, the battery control circuit 2a is provided with a connector 25 corresponding to the third protection board 33. One end of the connector 25 is electrically connected to the third protection board 33, and the other end is electrically connected to a first charging management chip 222 and a second charging management chip 225.

A difference between the battery control circuit 2a and the battery control circuit 2 in the battery body 1 further lies in that the battery control circuit 2a is provided with only one coulometer, for example, a coulometer 240. The processor 21 may simultaneously measure a voltage, a current, and an electricity quantity of each of the first bare cell 13 and the second bare cell 14 through the coulometer 240, and adjust parameters during charging of the battery 10a at any time based on detected data. In this way, the number of electronic components in the electronic device 100a can be further reduced, to reduce a size of the electronic device 100a, and reduce manufacturing costs.

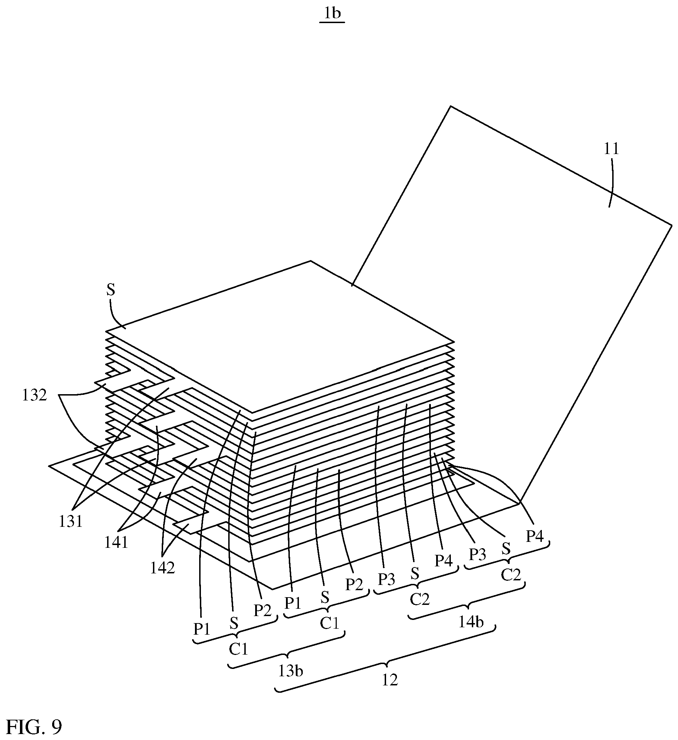

Further, as shown in FIG. 9, an embodiment of this application further provides a battery body 1b. A structure of the battery body 1b is generally the same as that of the battery body 1a. A difference lies in that the battery body 1b includes several stacked electrode plate combinations, and at least one electrode plate combination at any location in the several electrode plate combinations can form a bare cell. Each electrode plate combination includes a first-polarity electrode plate, a separator S, and a second-polarity electrode plate that are sequentially stacked. The first-polarity electrode plate and the second-polarity electrode plate have opposite polarities.

It can be understood that first-polarity sub-tabs of several electrode plate combinations that form one bare cell are electrically connected to each other to form a first-polarity tab, and second-polarity sub-tabs of several electrode plate combinations that form one bare cell are electrically connected to each other to form a second-polarity tab, so that the first-polarity tab and the second-polarity tab form charging and discharging contacts of a corresponding bare cell.

It can be understood that, compared with the foregoing two battery bodies (for example, the battery body 1 and the battery body 1a), in the battery body 1b provided in this embodiment of this application, several bare cells can be flexibly disposed in the battery body.

For example, as shown in FIG. 9, the battery body 1b includes several first electrode plate combinations C1 and several second electrode plate combinations C2. In the battery body 1b, the first electrode plate combinations C1 and the several second electrode plate combinations C2 are stacked in sequence. In addition, a separator S is further disposed between a first electrode plate combination C1 and a second electrode plate combination C2 that are adjacent. The several first electrode plate combinations C1 form a first bare cell 13b. The several second electrode plate combinations C2 form a second bare cell 14b.

The first electrode plate combination C1 includes a first electrode plate P1, a separator S, and a second electrode plate P2. The second electrode plate combination C2 includes a third electrode plate P3, a separator S, and a fourth electrode plate P4. Both the first electrode plate P1 and the third electrode plate P3 are first-polarity electrode plates, for example, positive electrode plates. Both the second electrode plate P2 and the fourth electrode plate P4 are second-polarity electrode plates, for example, negative electrode plates. In this way, in this embodiment of this application, the several electrode plate combinations C1 spaced apart form the first bare cell 13b, and the several second electrode plate combinations C2 spaced apart form the second bare cell 14b.

In this embodiment of this application, the first tab 134a, the second tab 135a, and the third tab 144a shown in FIG. 7 are also formed in the battery body 1b. As shown in FIG. 9, several second sub-tabs 132 respectively formed on several second electrode plates P2 are electrically connected to each other to jointly form the first tab 134a of the battery body 1b. Several first sub-tabs 131 respectively formed on several first electrode plates P1 are electrically connected to several third sub-tabs 141 formed on several third electrode plates P3 to jointly form the second tab 135a of the battery body 1b. Fourth sub-tabs 142 respectively formed on several fourth electrode plates P4 are electrically connected to each other to jointly form the third tab 144a of the battery body 1b. That is, in this embodiment of this application, the first bare cell 13b and the second bare cell 14b share a positive electrode tab.

In this embodiment of this application, the first sub-tabs 131, the second sub-tabs 132, the third sub-tabs 141, and the fourth sub-tabs 142 are all disposed on a same side of several electrode plate combinations. Projections of the several first sub-tab 131 and the several third sub-tabs 141 in a thickness direction of the battery body 1b overlap with each other, projections of the several second sub-tab 132 in the thickness direction of the battery body 1b overlap with each other, and projections of the several fourth sub-tabs 142 in the thickness direction of the battery body 1b overlap with each other. In addition, the first sub-tabs 131 and the third sub-tabs 141 are disposed between the second sub-tabs 132 and the fourth sub-tabs 142.

It can be understood that, in the battery body 1a shown in FIG. 9, when the first bare cell 13b and the second bare cell 14b belong to different bare cell types, the first electrode plate P1 and the third electrode plate P3 are coated with different electrode materials, and the second electrode plate P2 and the fourth electrode plate P4 are coated with different electrode materials. When the first bare cell 13b and the second bare cell 14b belong to a same bare cell type, the first electrode plate P1 and the third electrode plate P3 are coated with a same electrode material, and the second electrode plate P2 and the fourth electrode plate P4 are coated with a same electrode material.

It can be understood that the battery body 1b provided in this application may be used to replace the battery body 1a shown in FIG. 8 to form another electronic device (not shown in the figure).

An embodiment of this application further provides a charging control method. The charging control method may be applied to the charging control circuits of the electronic devices described in the foregoing three embodiments to control charging of a battery. In this embodiment of this application, for ease of description, an example in which the charging control method is applied to the battery 10 in the electronic device 100 is used for description.

The charging control method is performed by the processor 21. The charging control method can implement the following operations: when the electronic device 100 is electrically connected to the power supply unit 200, determining a type of each bare cell in the battery 10, and performing a corresponding charging policy based on the determined type of the bare cell. Compared with a conventional charging control method, the control method provided in this application is applicable to the battery 10 with different types of bare cells in this application, and can implement independent charging control on several bare cells in the battery 10, effectively increase a charging speed, and fully utilize performance of the battery 10 while ensuring charging safety of the battery 10. It can be understood that, when the battery 10 includes N different types of bare cells, in the charging control method provided in this embodiment of this application, N corresponding charging policies may be respectively performed for the N different types of bare cells.

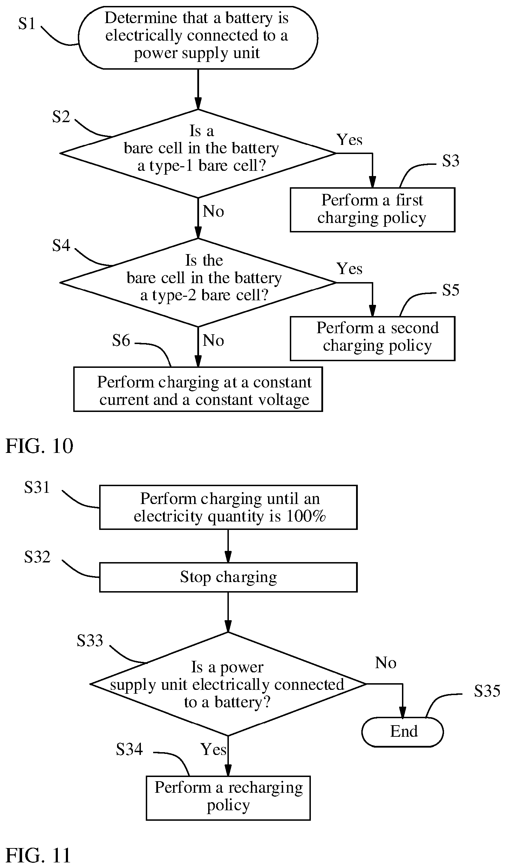

For example, as shown in FIG. 10, in this embodiment of this application, for ease of description, a specific process of the charging control method is described still by using an example in which the electronic device 100 includes the first bare cell 13 and the second bare cell 14 and a first charging policy and a second charging policy are performed for the first bare cell 13 and the second bare cell 14 respectively.

As shown in FIG. 10, for example, in this embodiment of this application, the charging control method includes the following steps.

Step S1: Determine that the battery 10 is electrically connected to the power supply unit 200.

Same as step S110, the processor 21 may detect voltages on the first charging port 223 and the second charging port 226 to determine whether the battery 10 is electrically connected to the power supply unit 200. For example, when detecting that voltages on the first charging port 223 and/or the second charging port 226 are greater than a preset voltage value, the processor 21 determines that the battery 10 is electrically connected to the power supply unit 200.

Step S2: Determine whether a bare cell in the battery 10 is a type-1 bare cell.

In this embodiment, an example in which the type-1 bare cell is a fast charging cell is used for description.

In step S110, the processor 21 may determine a type of a corresponding bare cell based on a corresponding charging management chip (for example, the first charging management chip 222 and the second charging management chip 225) and a corresponding protection board (for example, the first protection board 31 and the second protection board 32). For detailed content, refer to related descriptions of the battery body 1. Details are not described herein again.

In step S2, when the processor 21 determines that the bare cell in the battery 10 is a type-1 bare cell, for example, when the processor 21 determines that the first bare cell 13 in the battery 10 is a type-1 bare cell, step S3 is performed.

In step S2, when the processor 21 determines that the bare cell in the battery 10 is not a type-1 bare cell, for example, when the processor 21 determines that the first bare cell 13 in the battery 10 is not a type-1 bare cell, step S4 is performed.

Step S3: Perform the first charging policy.

Step S4: Determine whether the bare cell in the battery 10 is a type-2 bare cell.

In this embodiment, an example in which the type-2 bare cell is a cell with high energy density and high temperature resistance is used for description.

In step S4, when determining that the bare cell in the battery 10 is not a type-1 bare cell, the processor 21 continues to determine whether the bare cell is a type-2 bare cell. For example, when the processor 21 determines that the first bare cell 13 is not a type-1 bare cell, the processor 21 continues to determine whether the first bare cell 13 is a type-2 bare cell. When the processor 21 determines that the bare cell is a type-2 bare cell, step S5 is performed. When the processor 21 determines that the bare cell is not a type-2 bare cell, step S6 is performed.

Step S5: Perform the second charging policy.

Step S6: Perform charging at a constant current.

In this embodiment of this application, when the processor 21 determines that the bare cell (for example, the first bare cell 13 and the second bare cell 14) included in the battery 10 is neither a type-1 bare cell nor a type-2 bare cell, the processor 21 controls the bare cell (for example, the first bare cell 13 and the second bare cell 14) to perform charging at a constant current and a constant voltage.

The charging at a constant current and a constant voltage means that, in a first stage, the first bare cell 13 and the second bare cell 14 are separately charged at a constant current; and when a voltage reaches a predetermined value, a second stage starts, and charging is performed at a constant voltage, and in this case, a current gradually decreases. When a charging current decreases to zero, it indicates that the battery 10 is fully charged.

Further, FIG. 11 is a schematic diagram of a specific process of step S3 shown in FIG. 10. As shown in FIG. 11, in this embodiment of this application, the performing the first charging policy in step S3 specifically includes steps S31 to S35. For ease of description, in this embodiment of this application, an example in which the first charging policy is performed for the first bare cell 13 is used for description.

Step S31: Charge the first bare cell 13 until an electricity quantity of the first bare cell 13 is 100%, and then perform step S32.

Step S32: Stop charging.

During execution of step S32, the processor 21 detects an electricity quantity of the first bare cell 13 through the first coulometer 241, and stops charging the first bare cell 13 when an electricity quantity of the first bare cell 13 reaches 100%.

Step S33: Determine whether the power supply unit 200 is electrically connected to the battery 10.

If a determination result in step S33 is yes, step S34 is performed. If a determination result in step S33 is no, step S35 is performed, that is, charging ends.

In step S33, the processor 21 determines that the power supply unit 200 is electrically connected to the battery 10, to determine to continue to charge the first bare cell 13 to maintain a high electricity quantity of the first bare cell 13.

In some embodiments, the processor 21 may output a detection signal to the corresponding first charging port 223, to determine whether the power supply unit 200 is present. When the processor 21 outputs the detection signal and receives a corresponding feedback signal, the processor 21 determines that the power supply unit 200 and the battery 10 remain in an electrically connected state. When the processor 21 detects that a voltage on a charging port is less than a preset voltage, the processor 21 determines that the power supply unit 200 is disconnected from the battery 10. In this case, the processor 21 further performs step S35 to end charging. Step S34: Perform a recharging policy.

The recharging policy is a charging control method performed for recharging the first bare cell 13 when the power supply unit 200 is electrically connected to the battery 10 and after the first bare cell 13 is fully charged for a first time.

Step S35: End.

During the entire charging process, the processor 21 may further periodically detect a status of an electrical connection between the power supply unit 200 and the battery 10, and when detecting that the power supply unit 200 is disconnected from the battery 10, perform step S35 to end charging.

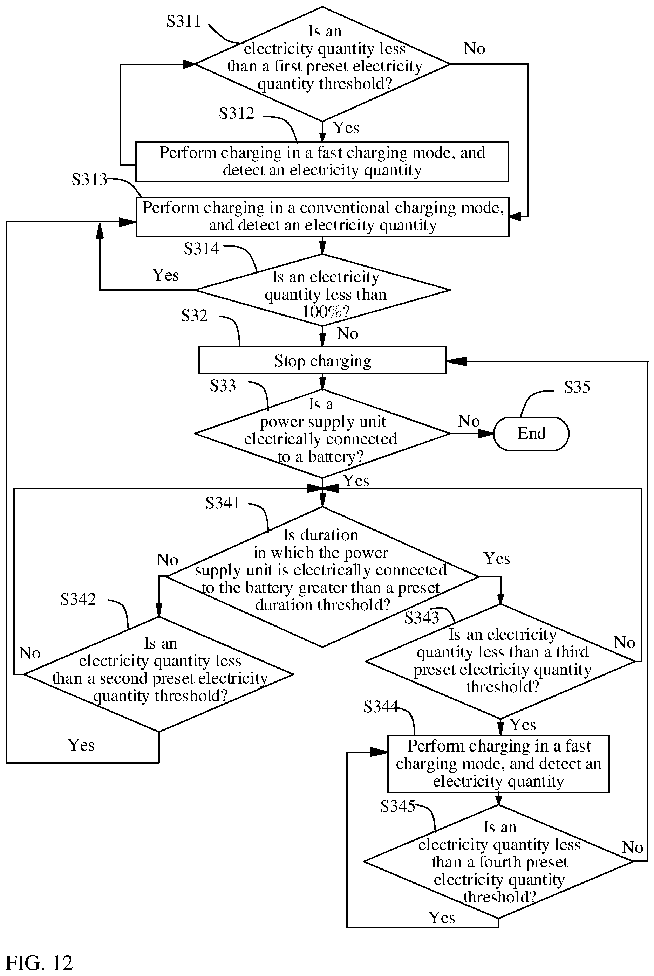

Further, FIG. 12 shows a specific process of step S31 shown in FIG. 11. In this embodiment of this application, step S31 further includes step S311 to step S314.

Step S311: Determine whether an electricity quantity of the first bare cell 13 is less than a first preset electricity quantity threshold. For example, the first preset electricity quantity threshold is 80% of an electricity quantity of the first bare cell 13 when the first bare cell 13 is fully charged.

A preset electricity quantity threshold is a preset value that describes an electricity quantity of a bare cell. In the charging control method provided in this application, a plurality of preset electricity quantity thresholds are set, to control a corresponding bare cell to switch to different charging stages when an electricity quantity of the bare cell reaches a corresponding preset electricity quantity threshold during charging. For example, in this embodiment of this application, the first preset electricity quantity threshold is an electricity quantity threshold for the first bare cell 13 to switch from a fast charging mode to a conventional charging mode during first charging of the first bare cell 13 after the battery 10 is connected to the power supply unit 200.

In step S311, the processor 21 detects the electricity quantity of the first bare cell 13 through the corresponding first coulometer 241. When the electricity quantity of the first bare cell 13 is less than the first preset electricity quantity threshold, step S312 is performed. When the electricity quantity of the first bare cell 13 is greater than or equal to the first preset electricity quantity threshold, step S313 is performed.

Step S312: Control the first charging management chip 222 to charge the first bare cell 13 in the fast charging mode, and detect an electricity quantity of the first bare cell 13 through the first coulometer 241.

In this embodiment of this application, the fast charging mode is a charging mode in which charging is performed at a current with a charging ratio of 0.7C or above. In this way, fast charging of the first bare cell 13 can be implemented in step S312.

It can be understood that the charging ratio is a metric of a charging speed and indicates a current value required for charging a battery to a rated capacity of the battery within specified time. The charging ratio is numerically equal to a multiple of the rated capacity of the battery, that is, the charging ratio = a charging current/the rated capacity, and the charging ratio is usually denoted as a letter C, where the "/" herein represents a division symbol. For example, in this embodiment of this application, a rated electricity quantity of the first bare cell 13 is 1 ampere hour (ampere hour, Ah). In this case, when the first bare cell 13 is charged at a current with a charging ratio of 0.7C, it indicates that a charging current of the first bare cell 13 is 0.7 amperes (ampere, A). When the electricity quantity of the first bare cell 13 in step S312 is greater than or equal to the first preset electricity quantity threshold, the processor 21 performs step S313.

Step S313: Control the first charging management chip 222 to charge the first bare cell 13 in the conventional charging mode, and detect an electricity quantity of the first bare cell 13 through the first coulometer 241.

In this embodiment of this application, the conventional charging mode is a charging mode in which charging is performed at a current with a charging ratio less than 0.7C. The conventional charging mode can reduce damage to the bare cell, reduce risks such as lithium precipitation and overcharging, maintain health of the bare cell, extend service life of the bare cell, and even reduce risks of short circuits and fire accidents of the bare cell during charging, thereby improving safety of the bare cell.

When the first bare cell 13 is charged in the conventional charging mode, a charging speed can be reduced to ensure charging safety.

Step S314: Determine whether the electricity quantity of the first bare cell 13 is less than an electricity quantity of the first bare cell 13 when the first bare cell 13 is fully charged.

That is, step S314 is used to determine whether the first bare cell 13 is fully charged.

When the processor 21 determines in step S314 that the electricity quantity of the first bare cell 13 is less than the electricity quantity of the first bare cell 13 when the first bare cell 13 is fully charged, that is, the first bare cell 13 is not fully charged, the processor 21 performs step S313, that is, charges the first bare cell 13 in the conventional charging mode. When the processor 21 detects, through the first coulometer 241, that the first bare cell 13 is fully charged, that is, an electricity quantity reaches 100%, the processor 21 performs step S32.

When the processor 21 detects that the electricity quantity of the first bare cell 13 is 100%, that is, the first bare cell 13 is fully charged, the processor 21 controls the first charging management chip 222 to stop charging the first bare cell 13, so as to ensure safety of the electronic device 100.

In step S311 to step S313, when the electricity quantity of the bare cell is less than the first preset electricity quantity threshold, the fast charging mode is triggered to increase a charging speed of the first bare cell 13 during first charging, so that an electricity quantity of the bare cell quickly reaches a fully charged state. In addition, when the electricity quantity of the bare cell is greater than or equal to the first preset electricity quantity threshold, the conventional charging mode is triggered, so that an electricity quantity of the bare cell reaches a fully charged state. In this way, in step S311 to step S314, switching between the fast charging mode and the conventional charging mode is designed, to reduce the number of times of high-voltage fast charging of the bare cell and extend service life of the bare cell while implementing fast charging.

After charging stops, the processor 21 further controls, through the power management module 26, the first bare cell 13 to discharge to other electrical components of the electronic device 100, to supply power to the electrical components. Therefore, after charging stops, an electricity quantity of the first bare cell 13 decreases. However, in some practical scenarios, the electronic device 100 may be charged for a long time. In one case, the electronic device 100 may be charged for a long time to ensure battery life of the electronic device 100 in a high-power scenario. For example, a mobile phone is charged while the mobile phone is being used to play a game. Another case is to reduce inconvenience of plugging operations during charging. Therefore, each time the battery 10 is fully charged to a cut-off electricity quantity, charging stops; and each time an electricity quantity of the battery 10 decreases to a recharging electricity quantity, charging continues.

However, if the recharging electricity quantity is close to a full charging capacity, an electricity quantity of the battery may quickly reach a recharging threshold, and recharging may be frequently performed. Consequently, the battery 10 still remains in a high electricity quantity state or a high voltage state for a long time. In addition, heat is generated due to charging conversion efficiency during recharging. This causes an increase in temperature of the battery 10, accelerates battery aging and failure, and leads to safety risks such as swelling. Therefore, the charging control method provided in this embodiment of this application further includes a recharging policy for the first bare cell 13.

For example, still as shown in 12, in this embodiment of this application, the recharging policy in step S34 includes step S341 to step S345.

Step S341: Determine whether duration in which the power supply unit 200 is electrically connected to the battery 10 is greater than or equal to a preset duration threshold.

In this embodiment of this application, when the processor 21 determines that the battery 10 is electrically connected to the power supply unit 200, the processor 21 starts timing until the power supply unit 200 is disconnected from the battery 10, and then ends timing.

The preset duration threshold is a value indicating duration in which the power supply unit 200 is electrically connected to the battery 10. In this embodiment of this application, the preset duration threshold is used to determine whether the power supply unit 200 is in a short-term presence state or a long-term presence state. For example, when the duration in which the power supply unit 200 is electrically connected to the battery 10 is less than or equal to the preset duration threshold, the processor 21 determines that the power supply unit 200 is in the short-term presence state. When the duration in which the power supply unit 200 is electrically connected to the battery 10 is greater than the preset duration threshold, the processor 21 determines that the power supply unit 200 is in the long-term presence state.

In this embodiment of this application, to maximize service life of the battery 10 and balance requirements for charging safety and fast charging, different recharging electricity quantity thresholds and different recharging policies are set for the first bare cell 13 based on the short-term presence state and the long-term presence state of the power supply unit 200.

For example, when the processor 21 determines that the duration in which the power supply unit 200 is electrically connected to the battery 10 is less than or equal to the preset duration threshold (for example, 72 hours), the processor 21 performs step S342. When the processor 21 determines that the duration in which the power supply unit 200 is electrically connected to the battery 10 is greater than the preset duration threshold, the processor 21 performs step S343. In this way, different recharging policies are provided for the first bare cell 13 based on different presence states of the power supply unit 200.

Step S342: Determine whether an electricity quantity of the first bare cell 13 is less than a second preset electricity quantity threshold. For example, the second preset electricity quantity threshold is 90% of the electricity quantity of the first bare cell 13 when the first bare cell 13 is fully charged.

The second preset electricity quantity threshold is a recharging electricity quantity threshold of the first bare cell 13 when the power supply unit 200 is in the short-term presence state. That is, when the processor 21 determines that the power supply unit 200 is currently in the short-term presence state and the electricity quantity of the first bare cell 13 is less than the second preset electricity quantity threshold, the first bare cell 13 is recharged. When the processor 21 determines that the power supply unit 200 is currently in the short-term presence state and the electricity quantity of the first bare cell 13 is greater than or equal to the second preset electricity quantity threshold, the processor 21 continues to detect an electricity quantity of the first bare cell 13 until an electricity quantity of the first bare cell 13 is less than the second preset electricity quantity threshold, and then the first bare cell 13 is charged.

For example, in step S342, when the processor 21 determines that the electricity quantity of the first bare cell 13 is less than the second preset electricity quantity threshold, step S313 is performed to charge the first bare cell 13 in the conventional charging mode and detect an electricity quantity. When it is determined that the electricity quantity of the first bare cell 13 is greater than or equal to the second preset electricity quantity threshold, step S341 is performed.

In step S341 and step S342, when the power supply unit 200 is in the short-term presence state and the electricity quantity of the first bare cell 13 is less than the second preset electricity quantity threshold, the first bare cell 13 is recharged in the conventional charging mode until the first bare cell 13 is fully charged. In this way, no margin needs to be reserved during charging of the first bare cell 13, so that performance of the first bare cell 13 can be fully utilized. In addition, the conventional charging mode can reduce damage to the first bare cell 13, reduce risks such as lithium precipitation and overcharging, maintain health of the first bare cell 13, extend service life of the first bare cell 13, and even reduce risks of short circuits and fire accidents of the first bare cell 13.

In this embodiment, the second preset electricity quantity threshold is greater than the first preset electricity quantity threshold.

Step S343: Determine whether an electricity quantity of the first bare cell 13 is less than a third preset electricity quantity threshold. For example, the third preset electricity quantity threshold is 60% of the electricity quantity of the first bare cell 13 when the first bare cell 13 is fully charged.

The third preset electricity quantity threshold is a recharging electricity quantity threshold of the first bare cell 13 when the power supply unit 200 is in the long-term presence state. That is, when the processor 21 determines that the power supply unit 200 is currently in the long-term presence state and the electricity quantity of the first bare cell 13 is less than the third preset electricity quantity threshold (that is, the duration in which the power supply unit 200 is electrically connected to the battery 10 is greater than the preset duration threshold), the first bare cell 13 is recharged. When the processor 21 determines that the power supply unit 200 is currently in the long-term presence state and the electricity quantity of the first bare cell 13 is greater than or equal to the third preset electricity quantity threshold, the processor 21 continues to detect an electricity quantity of the first bare cell 13 until an electricity quantity of the first bare cell 13 is less than the third preset electricity quantity threshold, and then the first bare cell 13 is charged.

For example, in step S343, when the electricity quantity of the first bare cell 13 is less than the third preset electricity quantity threshold, the processor 21 performs step S344. When the electricity quantity of the first bare cell 13 is greater than or equal to the third preset electricity quantity threshold, the processor 21 performs step S341.

Step S344: Charge the first bare cell 13 in the fast charging mode, and detect an electricity quantity of the first bare cell 13.

In this embodiment of this application, the fast charging mode in step S344 is the same as the fast charging mode mentioned in step S312. Details are not described herein again.

In this embodiment of this application, the third preset electricity quantity threshold is less than the second preset electricity quantity threshold.

To reduce the number of times of high-voltage recharging of the first bare cell 13, the electricity quantity of the first bare cell 13 in step S344 further needs to be detected. For example, in this embodiment of this application, the charging control method further includes step S345.

Step S345: Determine whether an electricity quantity of the first bare cell 13 is less than a fourth preset electricity quantity threshold. For example, the fourth preset electricity quantity threshold is 95% of an electricity quantity of the first bare cell 13 when the first bare cell 13 is fully charged.

The fourth preset electricity quantity threshold is an electricity quantity threshold for stopping charging when the first bare cell 13 is in the long-term presence state and after a recharging stage of the fast charging mode elapses. For example, in step S345, when the processor 21 determines, through the first coulometer 241, that the electricity quantity of the first bare cell 13 is less than the fourth preset electricity quantity threshold, the processor 21 performs step S344 to continue to perform charging in the fast charging mode, so that the first bare cell 13 remains in a high electricity quantity state.

In step S345, when the processor 21 determines, through the first coulometer 241, that the electricity quantity of the first bare cell 13 is greater than or equal to the fourth preset electricity quantity threshold, the processor 21 performs step S32 to stop charging, so as to reserve electricity quantity margin for the first bare cell 13 and ensure safe usage of the battery 10.

In step S343 to step S345, when the power supply unit 200 is in the long-term presence state and the electricity quantity of the first bare cell 13 is less than the third preset electricity quantity threshold, the first bare cell 13 is recharged in the fast charging mode, until an electricity quantity of the first bare cell 13 reaches the fourth preset electricity quantity threshold, and then charging stops. In this way, when the electricity quantity of the first bare cell 13 is less than the third preset electricity quantity threshold, the fast charging mode is used for charging, to increase a charging speed. In addition, the recharging electricity quantity threshold is strictly limited to prevent the first bare cell 13 from remaining in a long-term high-voltage state and extend service life of the bare cell.

In this embodiment of this application, the fourth preset electricity quantity threshold is greater than the second preset electricity quantity threshold and less than 100%.

In another embodiment, the first bare cell 13 may alternatively be recharged in another charging mode in step S344.

When the processor 21 determines that the second bare cell 14 is a type-2 bare cell, the processor 21 performs the second charging policy for the second bare cell 14. The type-2 bare cell is, for example, a cell with high energy density and high temperature resistance.

In this embodiment of this application, a process of the second charging policy is generally the same as that of the first charging policy shown in FIG. 12. A difference lies in that step S31 and step S34 in the second charging policy are different from step S31 and step S34 in the first charging policy.

In this embodiment of this application, because the second bare cell 14 is a cell with high energy density and high temperature resistance, in the second charging policy used for the second bare cell 14, charging is performed only in a conventional charging mode. The conventional charging mode in the second charging policy is the same as that in the second charging policy. Details are not described herein again.

Specifically, in the second charging policy, the second bare cell 14 is charged in the conventional charging mode in step S31 until the second bare cell 14 is fully charged.

In step S344 of the second charging policy, when the power supply unit 200 is in the long-term presence state, the second bare cell 14 is recharged in the conventional charging mode. When the second bare cell 14 is recharged to an electricity quantity threshold (for example, the fifth preset electricity quantity threshold), charging of the second bare cell 14 stops.

It can be understood that, in the second charging policy, specific values of the second preset electricity quantity threshold, the third preset electricity quantity threshold, the fourth preset electricity quantity threshold, and the preset duration threshold in the charging control method shown in FIG. 12 may be adjusted based on characteristics and actual requirements of the second bare cell 14. For example, in the second charging policy, the second preset electricity quantity threshold is 95% of an electricity quantity of the second bare cell 14 when the second bare cell 14 is fully charged. The third preset electricity quantity threshold is, for example, 90% of the electricity quantity of the second bare cell 14 when the second bare cell 14 is fully charged. The fourth preset electricity quantity threshold in step S344 is replaced with the fifth preset electricity quantity threshold, and the fifth preset electricity quantity threshold is, for example, 97% of the electricity quantity of the second bare cell 14 when the second bare cell 14 is fully charged.

The electricity quantity thresholds mentioned in the foregoing embodiments are merely used as examples to describe specific charging policies, but not intended to limit the control methods provided in the embodiments of this application. In another embodiment, a person skilled in the art may change specific values of the foregoing electricity quantity thresholds according to specific requirements.

The foregoing embodiments describe only processes in which the processor 21 controls the first bare cell 13 and the second bare cell 14 to perform charging based on different charging policies. In another embodiment, the processor 21 may alternatively control the first bare cell 13 and the second bare cell 14 to discharge; or control one of the first bare cell 13 and the second bare cell 14 to perform charging, where the other one of the first bare cell 13 and the second bare cell 14 supplies power to the electronic device 100 through a power management chip.

In another embodiment, the processor 21 may control any one of the first bare cell 13 and the second bare cell 14 to discharge until an electricity quantity of the bare cell is exhausted, and then control the other one of the first bare cell 13 and the second bare cell 14 to discharge; or the processor 21 may control the first bare cell 13 and the second bare cell 14 to discharge in sequence; or the processor 21 may control the first bare cell 13 and the second bare cell 14 to simultaneously discharge.

The two charging policies provided in the foregoing embodiments may alternatively be separately implemented in a battery with only one bare cell.

In the electronic devices 100 and 100a and the charging control method provided in the embodiments of this application, different types of bare cells are disposed in the same battery 10 or 10a, and the bare cells are electrically connected to different charging management chips, so that charging is performed by using different charging control methods under the control of the processor 21, to implement independent control on different bare cells in the battery 10 or 10a, and match the most appropriate charging and discharging management policy for each bare cell. In this way, compared with a conventional electronic device, an electronic device equipped with the battery 10 or 10a has a high charging speed, and can fully utilize performance of the battery and meet battery usage requirement of users in different scenarios, for example, perform fast charging for the battery in a high-temperature scenario.

## Claims

1. A battery control circuit (2), configured to control charging and discharging of a battery (10), wherein the battery control circuit (2) comprises a processor (21) and one or more charging links (22), the battery (10) comprises one or more bare cells (12), the charging link (22) is electrically connected to the bare cell (12) and the processor (21), and the processor (21) is configured to determine, based on a type of the bare cell (12), a charging policy to be performed by the charging link (22), **characterized in that** the type of the bare cell (12) comprises type-1 and type-2,
wherein a type-1 bare cell is a fast charging cell which is a cell with a fast charging capability and capable of implementing a charging process with a charging ratio not less than a preset threshold which is greater than 0.7C;
wherein a type-2 bare cell is a cell with high energy density and high temperature resistance, which refers to a cell which has a volumetric energy density greater than 600 Wh/L and can continuously and stably operate at a temperature above 30°C, and
wherein the type-1 bare cell and the type-2 bare cell are immersed in a same type of electrolyte.

2. The battery control circuit according to claim 1, wherein the charging link comprises a charging management chip (222, 225), the charging management chip (222, 225) is electrically connected to the processor and the bare cell, and the processor controls the charging management chip (222, 225) to process an input current and an input voltage of the charging link, and output a charging current and a charging voltage to the bare cell.

3. The battery control circuit according to claim 2, wherein the battery control circuit further comprises a charging port (223, 226), one end of the charging port (223, 226) is electrically connected to a power supply unit (200) to receive the input current and the input voltage output by the power supply unit (200), the other end of the charging port (223, 226) is electrically connected to the charging management chip to output the input current and the input voltage to the charging management chip, and the processor is electrically connected to the charging port (223, 226) to detect a voltage change of the charging port (223, 226), so as to determine a status of an electrical connection between the battery control circuit and the power supply unit (200).

4. The battery control circuit according to claim 1, wherein the number of charging links is the same as that of bare cells, and the charging link is electrically connected to the bare cell in a one-to-one correspondence.

5. The battery control circuit according to claim 1, wherein the battery control circuit further comprises a coulometer (240), the coulometer (240) is electrically connected between the bare cell and the processor, and the processor monitors a voltage, a current, and/or an electricity quantity of a corresponding bare cell through the coulometer (240), and controls a charging process of a corresponding charging link based on a monitoring result.

6. The battery control circuit according to claim 2, wherein the battery further comprises one or more protection boards (3), the protection board (3) is electrically connected to the bare cell, the protection board (3) comprises a storage unit configured to store information about a type of the corresponding connected bare cell, the charging management chip is electrically connected to the corresponding bare cell through the protection board (3), and the processor receives, through communication between the charging management chip and the protection board (3), a feedback signal comprising the information, to determine a type of each bare cell.

7. The battery control circuit according to claim 6, wherein the protection board is provided with a radio frequency chip, the radio frequency chip is electrically connected to the storage unit, the charging management chip is provided with a radio frequency identification circuit, and the processor receives the feedback signal through communication between the radio frequency identification circuit and the radio frequency chip.

8. The battery control circuit according to claim 1, wherein the battery control circuit further comprises a power management module (26), the power management module (26) is electrically connected between the bare cell and the processor, and the processor controls discharging of the bare cell through the power management module (26).

9. An electronic device (100), wherein the electronic device (100) comprises a battery (10), the battery (10) comprises one or more bare cells (12), and the electronic device (100) further comprises the battery control circuit (2) according to any one of claims 1 to 8, configured to control charging and discharging of the battery (10).

10. A charging control method, used for controlling charging of a battery (10), wherein the charging control method is applied to a battery control circuit (2), the battery (10) comprises one or more bare cells (12), and the charging control method comprises:
when it is determined that the battery (10) is electrically connected to a power supply unit (200), determining (S2, S4) a type of the one or more bare cells (12) in the battery (10); and
performing (S3, S5) a corresponding charging policy based on the determined type of the one or more bare cells (12), **characterized in that** the type of the one or more bare cells (12) comprises type-1 and type-2,
wherein a type-1 bare cell is a fast charging cell which is a cell with a fast charging capability and capable of implementing a charging process with a charging ratio not less than a preset threshold which is greater than 0.7C;
wherein a type-2 bare cell is a cell with high energy density and high temperature resistance, which refers to a cell which has a volumetric energy density greater than 600 Wh/L and can continuously and stably operate at a temperature above 30°C, and
wherein the type-1 bare cell and the type-2 bare cell are immersed in a same type of electrolyte.

11. The charging control method according to claim 10, wherein the charging policy comprises:
charging (S31) the bare cell until the bare cell is fully charged;
stopping (S32) charging the bare cell;
determining (S33) that the power supply unit is electrically connected to the battery; and
performing (S34) a recharging policy on the bare cell.

12. The charging control method according to claim 11, wherein when it is determined that the bare cell is a type-1 bare cell, the charging the bare cell until the bare cell is fully charged comprises:
when an electricity quantity of the bare cell is less than a first preset electricity quantity threshold, charging (S312) the bare cell in a fast charging mode until the bare cell is fully charged; or
when an electricity quantity of the bare cell is greater than or equal to the first preset electricity quantity threshold, charging (S313) the bare cell in a conventional charging mode until the bare cell is fully charged.

13. The charging control method according to claim 11, wherein when it is determined that the bare cell is a type-2 bare cell, the charging the bare cell until the bare cell is fully charged comprises:
charging the bare cell in a conventional charging mode until the bare cell is fully charged.

14. The charging control method according to claim 11, wherein the performing a recharging policy on the bare cell comprises:
when duration in which the power supply unit is electrically connected to the bare cell is less than or equal to a preset duration threshold, determining (S342) whether an electricity quantity of the bare cell is less than a second preset electricity quantity threshold, wherein
when the electricity quantity of the bare cell is greater than or equal to the second preset electricity quantity threshold, continuing (S341) to determine whether duration in which the power supply unit is electrically connected to the bare cell is greater than the preset duration threshold, until duration in which the power supply unit is electrically connected to the bare cell is greater than the preset duration threshold; or
when the electricity quantity of the bare cell is less than the second preset electricity quantity threshold, charging (S313) the bare cell in a conventional charging mode, until the bare cell is fully charged, and performing the recharging policy, or until the power supply unit is disconnected from the battery, and ending (S32) the charging process.

15. The charging control method according to claim 14, wherein when it is determined that the bare cell is a type-1 bare cell, the performing a recharging policy on the bare cell further comprises:
when duration in which the power supply unit is electrically connected to the bare cell is greater than the preset duration threshold, determining (S343) whether an electricity quantity of the bare cell is less than a third preset electricity quantity threshold;
when the electricity quantity of the bare cell is less than the third preset electricity quantity threshold, charging (S344) the bare cell in a fast charging mode, and detecting (S345) an electricity quantity;
when the electricity quantity of the bare cell is less than a fourth preset electricity quantity threshold, continuing (S344) to charge the bare cell in the fast charging mode until an electricity quantity of the bare cell is greater than or equal to the fourth preset electricity quantity threshold; and
when the electricity quantity of the bare cell is greater than or equal to the fourth preset electricity quantity threshold, stopping (S32) charging the bare cell and performing the recharging policy, or waiting until the power supply unit is disconnected from the battery and ending the charging process.

## Patentansprüche

1. Batteriesteuerschaltung (2), die konfiguriert ist, um das Laden und Entladen einer Batterie (10) zu steuern, wobei die Batteriesteuerschaltung (2) einen Prozessor (21) und einen oder mehrere Ladezweige (22) umfasst, wobei die Batterie (10) eine oder mehrere Bare-Cells (12) umfasst, wobei der Ladezweig (22) elektrisch mit der Bare-Cell (12) und dem Prozessor (21) verbunden ist, und der Prozessor (21) konfiguriert ist, basierend auf einem Typ der Bare-Cell (12) eine durch den Ladezweig (22) auszuführende Ladestrategie zu bestimmen, **dadurch gekennzeichnet, dass** der Typ der Bare-Cell (12) Typ-1 und Typ-2 umfasst,
wobei eine Typ-1-Bare-Cell eine Schnellladezelle ist, die eine Zelle mit einer Schnellladefähigkeit ist und in der Lage ist, einen Ladevorgang mit einer Laderate von nicht weniger als einem voreingestellten Schwellenwert, der größer als 0,7C ist, zu implementieren;
wobei eine Typ-2-Bare-Cell eine Zelle mit hoher Energiedichte und hoher Temperaturbeständigkeit ist, was sich auf eine Zelle bezieht, die eine volumetrische Energiedichte von mehr als 600 Wh/L aufweist und kontinuierlich und stabil bei einer Temperatur über 30 °C betrieben werden kann, und
wobei die Typ-1-Bare-Cell und die Typ-2-Bare-Cell in dieselbe Art von Elektrolyt eingetaucht sind.

2. Batteriesteuerschaltung nach Anspruch 1, wobei der Ladezweig einen Lademanagement-Chip (222, 225) umfasst, wobei der Lademanagement-Chip (222, 225) elektrisch mit dem Prozessor und der Bare-Cell verbunden ist, und der Prozessor den Lademanagement-Chip (222, 225) steuert, um einen Eingangsstrom und eine Eingangsspannung des Ladezweigs zu verarbeiten und einen Ladestrom und eine Ladespannung an die Bare-Cell auszugeben.

3. Batteriesteuerschaltung nach Anspruch 2, wobei die Batteriesteuerschaltung ferner einen Ladeanschluss (223, 226) umfasst, wobei ein Ende des Ladeanschlusses (223, 226) elektrisch mit einer Stromversorgungseinheit (200) verbunden ist, um den von der Stromversorgungseinheit (200) ausgegebenen Eingangsstrom und die Eingangsspannung zu empfangen, das andere Ende des Ladeanschlusses (223, 226) elektrisch mit dem Lademanagement-Chip verbunden ist, um den Eingangsstrom und die Eingangsspannung an den Lademanagement-Chip auszugeben, und der Prozessor elektrisch mit dem Ladeanschluss (223, 226) verbunden ist, um eine Spannungsänderung des Ladeanschlusses (223, 226) zu erfassen, um so einen Status einer elektrischen Verbindung zwischen der Batteriesteuerschaltung und der Stromversorgungseinheit (200) zu bestimmen.

4. Batteriesteuerschaltung nach Anspruch 1, wobei die Anzahl der Ladezweige dieselbe ist wie die der Bare-Cells und der Ladezweig elektrisch mit der Bare-Cell in einer Eins-zu-eins-Entsprechung verbunden ist.

5. Die Batteriesteuerschaltung nach Anspruch 1, wobei die Batteriesteuerschaltung ferner ein Coulometer (240) umfasst, das Coulometer (240) elektrisch zwischen der nackten Zelle und dem Prozessor geschaltet ist, und der Prozessor eine Spannung, einen Strom und/oder eine Elektrizitätsmenge einer entsprechenden nackten Zelle durch das Coulometer (240) überwacht und einen Ladevorgang eines entsprechenden Ladezweigs basierend auf einem Überwachungsergebnis steuert.

6. Die Batteriesteuerschaltung nach Anspruch 2, wobei die Batterie ferner eine oder mehrere Schutzplatinen (3) umfasst, die Schutzplatine (3) elektrisch mit der nackten Zelle verbunden ist, die Schutzplatine (3) eine Speichereinheit umfasst, die konfiguriert ist, um Informationen über einen Typ der entsprechenden verbundenen nackten Zelle zu speichern, der Lademanagement-Chip über die Schutzplatine (3) elektrisch mit der entsprechenden nackten Zelle verbunden ist, und der Prozessor durch Kommunikation zwischen dem Lademanagement-Chip und der Schutzplatine (3) ein Rückkopplungssignal empfängt, das die Informationen umfasst, um einen Typ jeder nackten Zelle zu bestimmen.

7. Die Batteriesteuerschaltung nach Anspruch 6, wobei die Schutzplatine mit einem Hochfrequenz-Chip versehen ist, der Hochfrequenz-Chip elektrisch mit der Speichereinheit verbunden ist, der Lademanagement-Chip mit einer Funkfrequenz-Identifizierungsschaltung versehen ist, und der Prozessor das Rückkopplungssignal durch Kommunikation zwischen der Funkfrequenz-Identifizierungsschaltung und dem Hochfrequenz-Chip empfängt.

8. Die Batteriesteuerschaltung nach Anspruch 1, wobei die Batteriesteuerschaltung ferner ein Energieverwaltungsmodul (26) umfasst, das Energieverwaltungsmodul (26) elektrisch zwischen der nackten Zelle und dem Prozessor geschaltet ist, und der Prozessor das Entladen der nackten Zelle durch das Energieverwaltungsmodul (26) steuert.

9. Eine elektronische Vorrichtung (100), wobei die elektronische Vorrichtung (100) eine Batterie (10) umfasst, die Batterie (10) eine oder mehrere nackte Zellen (12) umfasst, und die elektronische Vorrichtung (100) ferner die Batteriesteuerschaltung (2) nach einem der Ansprüche 1 bis 8 umfasst, die konfiguriert ist, um das Laden und Entladen der Batterie (10) zu steuern.

10. Ein Ladesteuerungsverfahren, das zum Steuern des Ladens einer Batterie (10) verwendet wird, wobei das Ladesteuerungsverfahren auf eine Batteriesteuerschaltung (2) angewendet wird, die Batterie (10) eine oder mehrere nackte Zellen (12) umfasst, und das Ladesteuerungsverfahren umfasst:
wenn bestimmt wird, dass die Batterie (10) elektrisch mit einer Stromversorgungseinheit (200) verbunden ist, Bestimmen (S2, S4) eines Typs der einen oder mehreren nackten Zellen (12) in der Batterie (10); und
Ausführen (S3, S5) einer entsprechenden Ladestrategie basierend auf dem bestimmten Typ der einen oder mehreren nackten Zellen (12), **dadurch gekennzeichnet, dass** der Typ der einen oder mehreren nackten Zellen (12) Typ-1 und Typ-2 umfasst,
wobei eine nackte Zelle vom Typ-1 eine Schnellladezelle ist, die eine Zelle mit einer Schnellladefähigkeit ist und in der Lage ist, einen Ladevorgang mit einer Laderate von nicht weniger als einem voreingestellten Schwellenwert, der größer als 0,7C ist, zu implementieren;
wobei eine nackte Zelle vom Typ-2 eine Zelle mit hoher Energiedichte und hoher Temperaturbeständigkeit ist, was sich auf eine Zelle bezieht, die eine volumetrische Energiedichte von mehr als 600 Wh/L aufweist und kontinuierlich und stabil bei einer Temperatur über 30 °C betrieben werden kann, und
wobei die nackte Zelle vom Typ-1 und die nackte Zelle vom Typ-2 in denselben Elektrolyttyp eingetaucht sind.

11. Ladesteuerungsverfahren nach Anspruch 10, wobei die Ladestrategie umfasst:
Laden (S31) der nackten Zelle, bis die nackte Zelle vollständig geladen ist;
Stoppen (S32) des Ladens der nackten Zelle;
Bestimmen (S33), dass die Stromversorgungseinheit elektrisch mit der Batterie verbunden ist; und
Ausführen (S34) einer Nachladestrategie an der nackten Zelle.

12. Ladesteuerungsverfahren nach Anspruch 11, wobei, wenn bestimmt wird, dass die nackte Zelle eine nackte Zelle vom Typ-1 ist, das Laden der nackten Zelle, bis die nackte Zelle vollständig geladen ist, umfasst:
wenn eine Elektrizitätsmenge der nackten Zelle geringer als ein erster voreingestellter Elektrizitätsmengenschwellenwert ist, Laden (S312) der nackten Zelle in einem Schnelllademodus, bis die nackte Zelle vollständig geladen ist; oder
wenn eine Elektrizitätsmenge der nackten Zelle größer als oder gleich dem ersten voreingestellten Elektrizitätsmengenschwellenwert ist, Laden (S313) der nackten Zelle in einem herkömmlichen Lademodus, bis die nackte Zelle vollständig geladen ist.

13. Ladesteuerungsverfahren nach Anspruch 11, wobei, wenn bestimmt wird, dass die nackte Zelle eine nackte Zelle vom Typ-2 ist, das Laden der nackten Zelle, bis die nackte Zelle vollständig geladen ist, umfasst:
Laden der nackten Zelle in einem herkömmlichen Lademodus, bis die nackte Zelle vollständig geladen ist.

14. Ladesteuerungsverfahren nach Anspruch 11, wobei das Ausführen einer Nachladestrategie an der nackten Zelle umfasst:
wenn eine Dauer, in der die Stromversorgungseinheit elektrisch mit der nackten Zelle verbunden ist, kleiner oder gleich einem voreingestellten Dauerschwellenwert ist, Bestimmen (S342), ob eine Elektrizitätsmenge der nackten Zelle kleiner als ein zweiter voreingestellter Elektrizitätsmengenschwellenwert ist, wobei
wenn die Elektrizitätsmenge der nackten Zelle größer als oder gleich dem zweiten voreingestellten Elektrizitätsmengen-Schwellenwert ist, Fortsetzen (S341) des Bestimmens, ob die Dauer, in der die Stromversorgungseinheit mit der nackten Zelle elektrisch verbunden ist, größer als der voreingestellte Dauerschwellenwert ist, bis die Dauer, in der die Stromversorgungseinheit mit der nackten Zelle elektrisch verbunden ist, größer als der voreingestellte Dauerschwellenwert ist; oder
wenn die Elektrizitätsmenge der nackten Zelle geringer als der zweite voreingestellte Elektrizitätsmengen-Schwellenwert ist, Laden (S313) der nackten Zelle in einem herkömmlichen Lademodus, bis die nackte Zelle vollständig geladen ist, und Ausführen der Nachladestrategie, oder bis die Stromversorgungseinheit von der Batterie getrennt wird, und Beenden (S32) des Ladevorgangs.

15. Ladesteuerungsverfahren nach Anspruch 14, wobei, wenn bestimmt wird, dass die nackte Zelle eine nackte Zelle vom Typ 1 ist, das Ausführen einer Nachladestrategie an der nackten Zelle ferner umfasst:
wenn die Dauer, in der die Stromversorgungseinheit mit der nackten Zelle elektrisch verbunden ist, größer als der voreingestellte Dauerschwellenwert ist, Bestimmen (S343), ob eine Elektrizitätsmenge der nackten Zelle geringer als ein dritter voreingestellter Elektrizitätsmengen-Schwellenwert ist;
wenn die Elektrizitätsmenge der nackten Zelle geringer als der dritte voreingestellte Elektrizitätsmengen-Schwellenwert ist, Laden (S344) der nackten Zelle in einem Schnelllademodus und Erfassen (S345) einer Elektrizitätsmenge;
wenn die Elektrizitätsmenge der nackten Zelle geringer als ein vierter voreingestellter Elektrizitätsmengen-Schwellenwert ist, Fortsetzen (S344) des Ladens der nackten Zelle im Schnelllademodus, bis eine Elektrizitätsmenge der nackten Zelle größer als oder gleich dem vierten voreingestellten Elektrizitätsmengen-Schwellenwert ist; und
wenn die Elektrizitätsmenge der nackten Zelle größer als oder gleich dem vierten voreingestellten Elektrizitätsmengen-Schwellenwert ist, Stoppen (S32) des Ladens der nackten Zelle und Ausführen der Nachladestrategie, oder Warten, bis die Stromversorgungseinheit von der Batterie getrennt wird, und Beenden des Ladevorgangs.

## Revendications

1. Circuit de commande de batterie (2), configuré pour commander la charge et la décharge d'une batterie (10), dans lequel le circuit de commande de batterie (2) comprend un processeur (21) et une ou plusieurs liaisons de charge (22), la batterie (10) comprend une ou plusieurs cellules nues (12), la liaison de charge (22) est connectée électriquement à la cellule nue (12) et au processeur (21), et le processeur (21) est configuré pour déterminer, sur la base d'un type de la cellule nue (12), une politique de charge à exécuter par la liaison de charge (22), **caractérisé en ce que** le type de la cellule nue (12) comprend le type 1 et le type 2,
dans lequel une cellule nue de type 1 est une cellule à charge rapide qui est une cellule ayant une capacité de charge rapide et capable de mettre en œuvre un processus de charge avec un taux de charge non inférieur à un seuil prédéfini qui est supérieur à 0,7C ;
dans lequel une cellule nue de type 2 est une cellule ayant une densité énergétique élevée et une résistance aux températures élevées, ce qui désigne une cellule qui a une densité énergétique volumétrique supérieure à 600 Wh/L et peut fonctionner de manière continue et stable à une température supérieure à 30 °C, et
dans lequel la cellule nue de type 1 et la cellule nue de type 2 sont immergées dans un même type d'électrolyte.

2. Circuit de commande de batterie selon la revendication 1, dans lequel la liaison de charge comprend une puce de gestion de charge (222, 225), la puce de gestion de charge (222, 225) est connectée électriquement au processeur et à la cellule nue, et le processeur commande la puce de gestion de charge (222, 225) pour traiter un courant d'entrée et une tension d'entrée de la liaison de charge, et délivrer en sortie un courant de charge et une tension de charge à la cellule nue.

3. Circuit de commande de batterie selon la revendication 2, dans lequel le circuit de commande de batterie comprend en outre un port de charge (223, 226), une extrémité du port de charge (223, 226) est connectée électriquement à une unité d'alimentation électrique (200) pour recevoir le courant d'entrée et la tension d'entrée délivrés en sortie par l'unité d'alimentation électrique (200), l'autre extrémité du port de charge (223, 226) est connectée électriquement à la puce de gestion de charge pour délivrer en sortie le courant d'entrée et la tension d'entrée à la puce de gestion de charge, et le processeur est connecté électriquement au port de charge (223, 226) pour détecter une variation de tension du port de charge (223, 226), afin de déterminer un état d'une connexion électrique entre le circuit de commande de batterie et l'unité d'alimentation électrique (200).

4. Circuit de commande de batterie selon la revendication 1, dans lequel le nombre de liaisons de charge est le même que celui des cellules nues, et la liaison de charge est connectée électriquement à la cellule nue selon une correspondance de un à un.

5. Le circuit de commande de batterie selon la revendication 1, dans lequel le circuit de commande de batterie comprend en outre un coulomètre (240), le coulomètre (240) est connecté électriquement entre la cellule nue et le processeur, et le processeur surveille une tension, un courant et/ou une quantité d'électricité d'une cellule nue correspondante à travers le coulomètre (240), et commande un processus de charge d'une liaison de charge correspondante sur la base d'un résultat de surveillance.

6. Le circuit de commande de batterie selon la revendication 2, dans lequel la batterie comprend en outre une ou plusieurs cartes de protection (3), la carte de protection (3) est connectée électriquement à la cellule nue, la carte de protection (3) comprend une unité de stockage configurée pour stocker des informations concernant un type de la cellule nue connectée correspondante, la puce de gestion de charge est connectée électriquement à la cellule nue correspondante à travers la carte de protection (3), et le processeur reçoit, par le biais d'une communication entre la puce de gestion de charge et la carte de protection (3), un signal de retour comprenant les informations, pour déterminer un type de chaque cellule nue.

7. Le circuit de commande de batterie selon la revendication 6, dans lequel la carte de protection est munie d'une puce radiofréquence, la puce radiofréquence est connectée électriquement à l'unité de stockage, la puce de gestion de charge est munie d'un circuit d'identification par radiofréquence, et le processeur reçoit le signal de retour par le biais d'une communication entre le circuit d'identification par radiofréquence et la puce radiofréquence.

8. Le circuit de commande de batterie selon la revendication 1, dans lequel le circuit de commande de batterie comprend en outre un module de gestion d'énergie (26), le module de gestion d'énergie (26) est connecté électriquement entre la cellule nue et le processeur, et le processeur commande la décharge de la cellule nue à travers le module de gestion d'énergie (26).

9. Un dispositif électronique (100), dans lequel le dispositif électronique (100) comprend une batterie (10), la batterie (10) comprend une ou plusieurs cellules nues (12), et le dispositif électronique (100) comprend en outre le circuit de commande de batterie (2) selon l'une quelconque des revendications 1 à 8, configuré pour commander la charge et la décharge de la batterie (10).

10. Procédé de commande de charge, utilisé pour commander la charge d'une batterie (10), dans lequel le procédé de commande de charge est appliqué à un circuit de commande de batterie (2), la batterie (10) comprend une ou plusieurs cellules nues (12), et le procédé de commande de charge comprend :
lorsqu'il est déterminé que la batterie (10) est connectée électriquement à une unité d'alimentation électrique (200), la détermination (S2, S4) d'un type de la ou des plusieurs cellules nues (12) dans la batterie (10) ; et
exécuter (S3, S5) une politique de charge correspondante sur la base du type déterminé de l'une ou plusieurs cellules nues (12), **caractérisé en ce que** le type de l'une ou plusieurs cellules nues (12) comprend le type 1 et le type 2,
dans lequel une cellule nue de type 1 est une cellule de charge rapide qui est une cellule ayant une capacité de charge rapide et capable de mettre en œuvre un processus de charge avec un rapport de charge non inférieur à un seuil prédéfini qui est supérieur à 0,7C ;
dans lequel une cellule nue de type 2 est une cellule à haute densité d'énergie et à haute résistance thermique, ce qui se rapporte à une cellule qui a une densité d'énergie volumétrique supérieure à 600 Wh/L et peut fonctionner de manière continue et stable à une température supérieure à 30 °C, et
dans lequel la cellule nue de type 1 et la cellule nue de type 2 sont immergées dans un même type d'électrolyte.

11. Procédé de commande de charge selon la revendication 10, dans lequel la politique de charge comprend :
charger (S31) la cellule nue jusqu'à ce que la cellule nue soit complètement chargée ;
arrêter (S32) la charge de la cellule nue ;
déterminer (S33) que l'unité d'alimentation électrique est connectée électriquement à la batterie ; et
exécuter (S34) une politique de recharge sur la cellule nue.

12. Procédé de commande de charge selon la revendication 11, dans lequel, lorsqu'il est déterminé que la cellule nue est une cellule nue de type 1, charger la cellule nue jusqu'à ce que la cellule nue soit complètement chargée comprend :
lorsqu'une quantité d'électricité de la cellule nue est inférieure à un premier seuil de quantité d'électricité prédéfini, charger (S312) la cellule nue dans un mode de charge rapide jusqu'à ce que la cellule nue soit complètement chargée ; ou
lorsqu'une quantité d'électricité de la cellule nue est supérieure ou égale au premier seuil de quantité d'électricité prédéfini, charger (S313) la cellule nue dans un mode de charge conventionnel jusqu'à ce que la cellule nue soit complètement chargée.

13. Procédé de commande de charge selon la revendication 11, dans lequel, lorsqu'il est déterminé que la cellule nue est une cellule nue de type 2, charger la cellule nue jusqu'à ce que la cellule nue soit complètement chargée comprend :
charger la cellule nue dans un mode de charge conventionnel jusqu'à ce que la cellule nue soit complètement chargée.

14. Procédé de commande de charge selon la revendication 11, dans lequel l'exécution d'une politique de recharge sur la cellule nue comprend :
lorsque la durée pendant laquelle l'unité d'alimentation électrique est connectée électriquement à la cellule nue est inférieure ou égale à un seuil de durée prédéfini, déterminer (S342) si une quantité d'électricité de la cellule nue est inférieure à un second seuil de quantité d'électricité prédéfini, dans lequel
lorsque la quantité d'électricité de la cellule nue est supérieure ou égale au deuxième seuil de quantité d'électricité prédéfini, continuer (S341) à déterminer si la durée pendant laquelle l'unité d'alimentation est connectée électriquement à la cellule nue est supérieure au seuil de durée prédéfini, jusqu'à ce que la durée pendant laquelle l'unité d'alimentation est connectée électriquement à la cellule nue soit supérieure au seuil de durée prédéfini ; ou
lorsque la quantité d'électricité de la cellule nue est inférieure au deuxième seuil de quantité d'électricité prédéfini, charger (S313) la cellule nue dans un mode de charge conventionnel, jusqu'à ce que la cellule nue soit complètement chargée, et exécuter la politique de recharge, ou jusqu'à ce que l'unité d'alimentation soit déconnectée de la batterie, et terminer (S32) le processus de charge.

15. Procédé de commande de charge selon la revendication 14, dans lequel, lorsqu'il est déterminé que la cellule nue est une cellule nue de type 1, l'exécution d'une politique de recharge sur la cellule nue comprend en outre :
lorsque la durée pendant laquelle l'unité d'alimentation est connectée électriquement à la cellule nue est supérieure au seuil de durée prédéfini, déterminer (S343) si une quantité d'électricité de la cellule nue est inférieure à un troisième seuil de quantité d'électricité prédéfini ;
lorsque la quantité d'électricité de la cellule nue est inférieure au troisième seuil de quantité d'électricité prédéfini, charger (S344) la cellule nue dans un mode de charge rapide, et détecter (S345) une quantité d'électricité ;
lorsque la quantité d'électricité de la cellule nue est inférieure à un quatrième seuil de quantité d'électricité prédéfini, continuer (S344) à charger la cellule nue dans le mode de charge rapide jusqu'à ce qu'une quantité d'électricité de la cellule nue soit supérieure ou égale au quatrième seuil de quantité d'électricité prédéfini ; et
lorsque la quantité d'électricité de la cellule nue est supérieure ou égale au quatrième seuil de quantité d'électricité prédéfini, arrêter (S32) la charge de la cellule nue et exécuter la politique de recharge, ou attendre que l'unité d'alimentation soit déconnectée de la batterie et terminer le processus de charge.
